# EUROPEAN PATENT APPLICATION

(11) **EP 4 371 935 A1**
(43) Date of publication of application: **22.05.2024**
(21) Application number: 22842065.9
(22) Date of filing: 11.07.2022
(51) Int. Cl.: C01B 32/40, B01J 8/00, B01J 8/04

(54) **GAS PRODUCTION DEVICE, GAS PRODUCTION SYSTEM, AND GAS PRODUCTION METHOD**

(30) Priority: 12.07.2021 JP 2021114968
(71) Applicant: SEKISUI CHEMICAL CO., LTD., Osaka-shi Osaka 530-8565 (JP)
(72) Inventor: NAKAMURA, Masaki, Tsukuba-shi, Ibaraki 300-4292 (JP); NAKAMA, Yuki, Tsukuba-shi, Ibaraki 300-4292 (JP); TONO, Tsuyoshi, Tsukuba-shi, Ibaraki 300-4292 (JP)
(74) Representative: Ter Meer Steinmeister & Partner
(86) International application number: PCT/JP2022/027190
(87) International publication number: WO 2023/286721

(57) **Abstract**

Provided are a gas production apparatus (that is, an industrially advantageous gas production apparatus), a gas production system, and a gas production method that can easily and accurately determine the timing to end a reaction and can operate stably.

A gas production apparatus 1 includes: reactors 4a and 4b each of which includes a container 41 through which a substrate gas is capable of passing and a reducing agent layer (packed bed) 42 with which the container 41 is filled and which includes a metal oxide that exchanges oxygen elements with the substrate gas by an exothermic reaction or an endothermic reaction; and a plurality of temperature sensors 4T1 to 4T4 that are connected to each of the reactors 4a and 4b and measure temperatures of a plurality of measurement points of the packed bed 42 along a passage direction of the substrate gas, respectively. When a length of the packed bed 42 along the passage direction of the substrate gas is H, an interval between adjacent measurement points is equal to or less than H/3.

## Description

### Technical Field

The present invention relates to a gas production apparatus, a gas production system, and a gas production method.

### Background Art

A reaction tank (for example, see Patent Document 1) to which gas is supplied to treat a loaded material (packed material) and a reaction tank in which gas is treated by the loaded material are known.

In general, two temperature sensors of a temperature sensor that measures the temperature of gas on a supply side and a temperature sensor that measures the temperature of gas on a discharge side are disposed in the reaction tank to control the temperature in the reaction tank.

### Prior Art Document

### Patent Document

Patent Document 1: Japanese Patent No. 5573727

### Summary of Invention

### Problem to be Solved by the Invention

However, studies conducted by the inventors proved that, in the above-described reaction tank, it was difficult to accurately determine the progress of the reaction in the treatment and to decide the timing to end the reaction.

Accordingly, an object of the present invention is to provide a gas production apparatus (that is, an industrially advantageous gas production apparatus), a gas production system, and a gas production method that can easily and accurately determine the timing to end a reaction and operate stably.

### Means for Solving the Problem

This object is achieved by the following invention.

(1) According to the present invention, there is provided a gas production apparatus including: at least one reactor including a container through which a substrate gas is capable of passing and a packed bed with which the container is filled and which includes a metal oxide that exchanges oxygen elements with the substrate gas by an exothermic reaction or an endothermic reaction; and a plurality of temperature sensors that are connected to the reactor and measure temperatures of a plurality of measurement points of the packed bed along a passage direction of the substrate gas, respectively. When a length of the packed bed along the passage direction is H, an interval between adjacent measurement points is equal to or less than H/3.
(2) In the gas production apparatus according to the present invention, preferably, an absolute value of a difference between an average value of the temperatures of the packed bed measured at the plurality of measurement points before supply of the substrate gas to the reactor is started and a maximum fluctuation value of the temperature of the packed bed measured at each of the measurement points after the supply of the substrate gas to the reactor is started is equal to or less than 200°C.
(3) In the gas production apparatus according to the present invention, preferably, the packed bed further includes a diluent that makes the number of the oxygen elements contributing to the exchange per unit volume of the entire packed bed smaller than the number of the oxygen elements contributing to the exchange per unit volume of only the metal oxide.
(4) In the gas production apparatus according to the present invention, preferably, the metal oxide is supported on the diluent.
(5) Preferably, the gas production apparatus according to the present invention further includes a heat exchanger that adjusts a temperature of the substrate gas, using heat of gas, before the substrate gas is supplied to the reactor.
(6) In the gas production apparatus according to the present invention, preferably, a temperature difference of the substrate gas before and after the substrate gas passes through one of the at least one reactor is equal to or less than 100°C.
(7) In the gas production apparatus according to the present invention, preferably, a plurality of the reactors that are capable of switching and supplying a first substrate gas causing the exothermic reaction and a second substrate gas causing the endothermic reaction as the substrate gas are provided.
(8) In the gas production apparatus according to the present invention, preferably, a temperature of the first substrate gas supplied to the reactor is set to be 30°C or more lower than a temperature of the second substrate gas supplied to the reactor.
(9) In the gas production apparatus according to the present invention, preferably, the temperature of the packed bed of the reactor that supplies the first substrate gas is set to be 30°C or more lower than the temperature of the packed bed of the reactor that supplies the second substrate gas.
(10) In the gas production apparatus according to the present invention, preferably, the number of the reactors supplying the second substrate gas is two or more, and the temperatures of the second substrate gas supplied to the reactors are different from each other.
(11) In the gas production apparatus according to the present invention, preferably, the plurality of reactors that supply the second substrate gas are connected in series.
(12) In the gas production apparatus according to the present invention, preferably, one of the plurality of temperature sensors is capable of measuring the temperature of the measurement point that is located at H/5 to H/20 from a downstream-side end of the packed bed in the passage direction. Preferably, when a change in the temperature of the measurement point is equal to or greater than 40% of a temperature change measured at the measurement point on a most upstream side in the packed bed in the passage direction, the first substrate gas and the second substrate gas are switched.
(13) In the gas production apparatus according to the present invention, preferably, a reaction amount of the metal oxide is calculated from a sum of temperature changes at the plurality of measurement points measured by the plurality of temperature sensors. Preferably, when the calculated reaction amount reaches a predetermined value, the first substrate gas and the second substrate gas are switched.
(14) In the gas production apparatus according to the present invention, preferably, the first substrate gas is carbon dioxide, and the second substrate gas is hydrogen.
(15) According to the present invention, there is provided a gas production system including: a gas supply unit that supplies a source gas including carbon dioxide; the gas production apparatus according to the present invention that is connected to the gas supply unit; and a gas recovery unit that recovers a product gas which has been produced in the gas production apparatus and includes carbon monoxide.
(16) According to the present invention, there is provided a gas production method including: when a first substrate gas or a second substrate gas is supplied to each of independent reactors, each of which has a reducing agent including a metal oxide that exchanges oxygen elements between the first substrate gas and the second substrate gas, to perform an exothermic reaction of the first substrate gas or an endothermic reaction of the second substrate gas by the reducing agent, setting a temperature of the first substrate gas to be 30°C or more lower than a temperature of the second substrate gas.
(17) In the gas production method according to the present invention, preferably, the temperature of the one substrate gas is 580°C to 1100°C, and the temperature of the other substrate gas is 550°C to 1000°C.
(18) In the gas production method according to the present invention, preferably, one of the reaction involving the heat generation of the first substrate gas and the reaction involving the heat absorption of the second substrate gas is a reduction reaction, and the other reaction is an oxidation reaction.
(19) In the gas production method according to the present invention, preferably, the first substrate gas is carbon dioxide, and the second substrate gas is hydrogen.

### Effects of the Invention

According to the present invention, it is possible to easily and accurately determine the timing to end a reaction and to stably produce a product gas including carbon monoxide from a source gas including carbon dioxide.

### Brief Description of the Drawings

Fig. 1 is a schematic diagram illustrating a first embodiment of a gas production system according to the present invention.
Fig. 2 is a schematic diagram illustrating a configuration of an exhaust gas heating unit illustrated in Fig. 1.
Fig. 3 is a vertical cross-sectional view schematically illustrating a configuration of a reactor illustrated in Fig. 1.
Fig. 4 is a vertical cross-sectional view schematically illustrating another configuration of a container.
Fig. 5 is a graph simply illustrating a temperature change at each measurement point.
Fig. 6 is a cross-sectional view schematically illustrating a configuration of a reactor including a reducing agent layer temperature control unit.
Fig. 7 is a vertical cross-sectional view schematically illustrating another configuration of a gas heating unit.
Fig. 8 is a vertical cross-sectional view schematically illustrating still another configuration of the gas heating unit.
Fig. 9 is a schematic diagram illustrating another configuration of the reactor.
Fig. 10 is a schematic diagram illustrating a second embodiment of the gas production system according to the present invention.
Fig. 11 is a schematic diagram illustrating a method for switching gases to pass through reactors in the second embodiment.
Fig. 12 is a schematic diagram illustrating a method for switching the gases to pass through the reactors in the second embodiment.
Fig. 13 is a schematic diagram illustrating a method for regenerating a reducing agent in the second embodiment.
Fig. 14 is a schematic diagram illustrating a method for replacing the reducing agent or overhauling the reactors in the second embodiment.
Fig. 15 is a schematic diagram illustrating a configuration of a reaction unit according to a third embodiment.
Fig. 16 is a schematic diagram illustrating a method for switching gases to pass through reactors in the third embodiment.
Fig. 17 is a schematic diagram illustrating a configuration of a reaction unit according to a fourth embodiment.
Fig. 18 is a schematic diagram illustrating a method for switching gases to pass through reactors in the fourth embodiment.
Fig. 19 is a schematic diagram illustrating another method for switching the gases to pass through the reactors in the fourth embodiment.

### Description of Embodiments

Hereinafter, a reactor, a gas production apparatus, and a gas production system according to the present invention will be described in detail on the basis of preferred embodiments illustrated in the accompanying drawings.

### <First Embodiment>

First, a first embodiment of the present invention will be described.

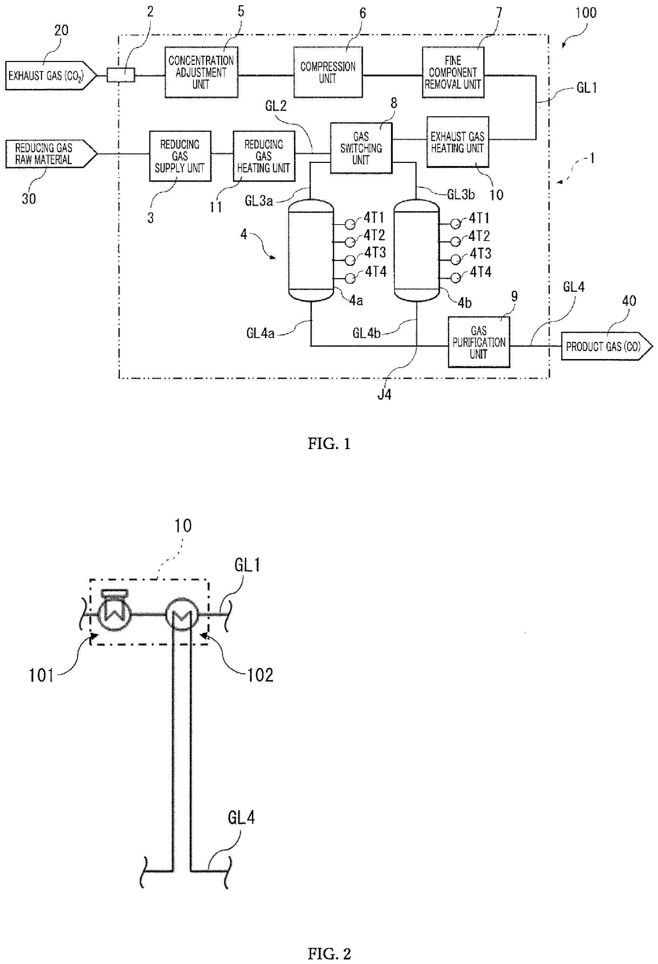

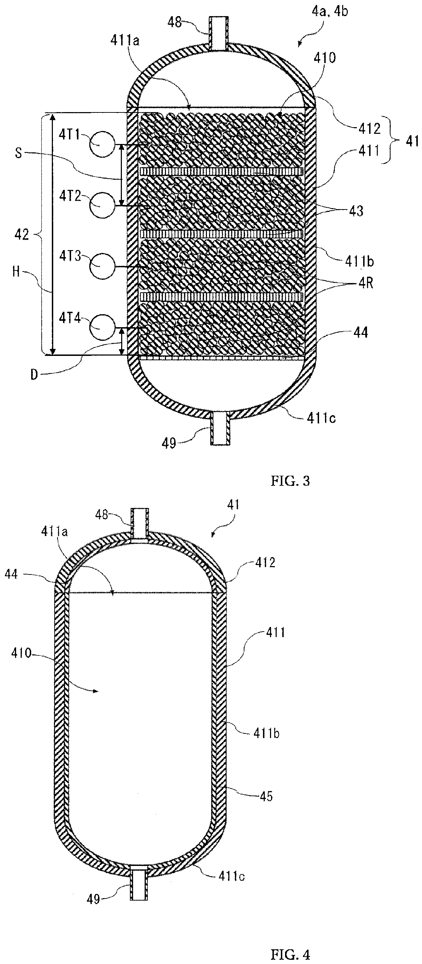

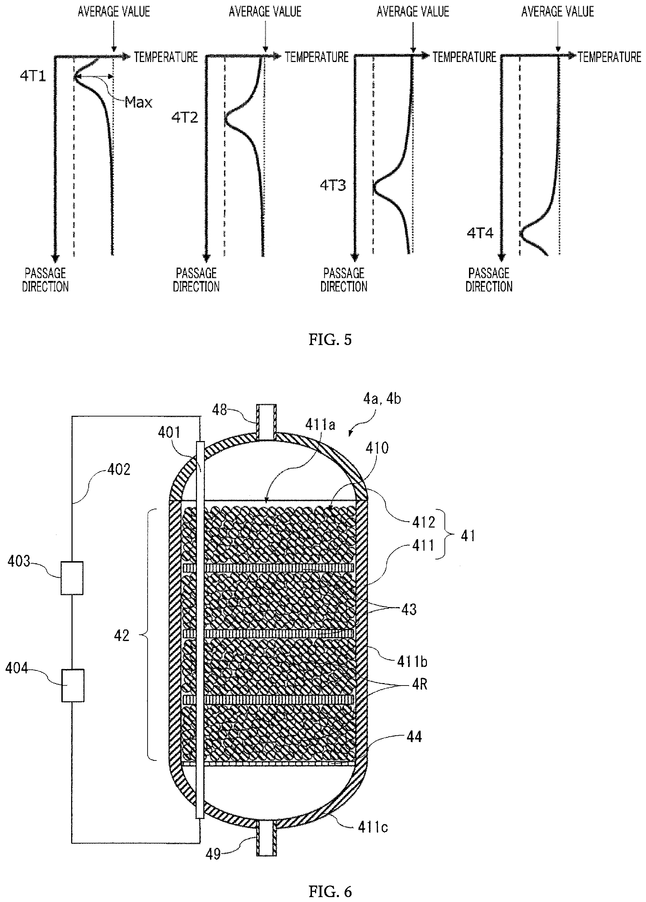

Fig. 1 is a schematic diagram illustrating the first embodiment of the gas production system according to the present invention. Fig. 2 is a schematic diagram illustrating a configuration of an exhaust gas heating unit illustrated in Fig. 1. Fig. 3 is a vertical cross-sectional view schematically illustrating a configuration of a reactor illustrated in Fig. 1. Fig. 4 is a vertical cross-sectional view schematically illustrating another configuration of a container. Fig. 5 is a graph simply illustrating a temperature change at each measurement point.

A gas production system 100 illustrated in Fig. 1 includes a furnace (source gas generation unit) 20 that generates exhaust gas (source gas) including carbon dioxide and a gas production apparatus 1 that is connected to the furnace 20 through a connection portion 2.

In addition, in this specification, an upstream side and a downstream side in a flow direction of gas are simply referred to as an "upstream side," and a "downstream side", respectively.

The furnace 20 is not particularly limited and is, for example, a furnace that is attached to a steel mill, a refinery, or a thermal power station. Preferably, examples of the furnace 20 include a combustion furnace, a blast furnace, and a converter. In the furnace 20, exhaust gas is generated (produced) during, for example, the combustion, melting, and refining of contents.

In the case of a combustion furnace (incinerator) in a garbage incinerator plant, examples of the contents (waste) include plastic waste, food garbage, municipal waste (MSW), waste tires, biomass waste, household garbage (futons and paper), and construction materials. In addition, the contents may include only one type or two or more types among these types of wastes.

In general, the exhaust gas includes other gas components, such as nitrogen, oxygen, carbon monoxide, water vapor, and methane, in addition to carbon dioxide. The concentration of carbon dioxide included in the exhaust gas is not particularly limited. However, the concentration of carbon dioxide is preferably equal to or greater than 1% by volume and more preferably equal to or greater than 5% by volume in consideration of the production cost of a product gas (conversion efficiency into carbon monoxide).

The exhaust gas from the combustion furnace in the garbage incinerator plant includes 5% to 15% by volume of carbon dioxide, 60% to 70% by volume of nitrogen, 5% to 10% by volume of oxygen, and 15% to 25% by volume of water vapor.

The exhaust gas (blast furnace gas) from the blast furnace is gas generated when pig iron is produced in the blast furnace and includes 10% to 15% by volume of carbon dioxide, 55% to 60% by volume of nitrogen, 25% to 30% by volume of carbon monoxide, and 1% to 5% by volume of hydrogen.

In addition, the exhaust gas (converter gas) from the converter is gas generated when steel is produced in the converter and includes 15% to 20% by volume of carbon dioxide, 50% to 60% by volume of carbon monoxide, 15% to 25% by volume of nitrogen, and 1% to 5% by volume of hydrogen.

Further, the source gas is not limited to the exhaust gas, and pure gas including 100% by volume of carbon dioxide may be used.

However, when the exhaust gas is used as the source gas, it is possible to effectively use carbon dioxide previously discharged into the atmosphere and to reduce a load on the environment. It is preferable to use exhaust gas including carbon dioxide generated at the steel mill or the refinery among these source gases from the viewpoint of carbon circulation.

In addition, for the blast furnace gas and the converter gas, untreated gas discharged from the furnace may be used without any change. For example, treated gas subjected to a treatment to remove carbon monoxide or the like may be used. Each of the untreated blast furnace gas and converter gas has the above-described gas composition, and the treated gas has a gas composition close to that of the exhaust gas from the combustion furnace. In this specification, all of the above-described gases (gases before being supplied to the gas production apparatus 1) are referred to as exhaust gas.

### <Overall Configuration>

The gas production apparatus 1 brings exhaust gas (source gas including carbon dioxide) that is discharged from the furnace 20 and supplied through the connection portion 2 into contact with a reducing agent 4R including a metal oxide that reduces the carbon dioxide included in the exhaust gas to produce a product gas (synthesis gas) including carbon monoxide.

Hereinafter, carbon dioxide will be described as an example of a first substrate gas that causes an exothermic reaction with the reducing agent 4R.

The gas production apparatus 1 mainly includes the connection portion 2, a reducing gas supply unit 3, two reactors 4a and 4b that are filled with the reducing agent 4R, a gas line GL1 that connects the connection portion 2 and each of the reactors 4a and 4b, a gas line GL2 that connects the reducing gas supply unit 3 and each of the reactors 4a and 4b, and a gas line GL4 that is connected to each of the reactors 4a and 4b.

In this embodiment, the connection portion 2 constitutes a source gas supply unit that supplies the exhaust gas to the reactors 4a and 4b.

In addition, as necessary, pumps for transferring gas may be disposed at predetermined locations in the middle of the gas line GL1, the gas line GL2, and the gas line GL4. For example, in a case where the pressure of the exhaust gas is adjusted to a relatively low level by a compression unit 6 which will be described below, the disposition of the pumps makes it possible to smoothly transfer gas in the gas production apparatus 1.

One end portion of the gas line GL1 is connected to the connection portion 2. On the other hand, the other end portion of the gas line GL1 is connected to inlet ports 48 of the reactors 4a and 4b provided in the reaction unit 4 through a gas switching unit 8 and two gas lines GL3a and GL3b.

The exhaust gas supplied from the furnace 20 through the connection portion 2 is supplied to each of the reactors 4a and 4b through the gas line GL1 by this configuration.

The gas switching unit 8 can be configured to include, for example, a branch gas line and a flow path opening and closing mechanism such as a valve provided in the middle of the branch gas line.

In addition, the configuration of each of the reactors 4a and 4b will be described in detail below.

A concentration adjustment unit 5, the compression unit 6, a fine component removal unit 7, and an exhaust gas heating unit (source gas heating unit) 10 are provided in the middle of the gas line GL1 in this order from the connection portion 2.

The concentration adjustment unit 5 adjusts the concentration of the carbon dioxide included in the exhaust gas such that the concentration is increased (in other words, the carbon dioxide is concentrated). The exhaust gas also includes unnecessary gas components such as oxygen. The concentration of the unnecessary gas components included in the exhaust gas can be relatively reduced by increasing the concentration of the carbon dioxide included in the exhaust gas in the concentration adjustment unit 5. Therefore, it is possible to prevent or suppress the adverse effect of the unnecessary gas components on the conversion efficiency of carbon dioxide into carbon monoxide by the reducing agent 4R.

It is preferable that the concentration adjustment unit 5 is configured by an oxygen removal device that removes oxygen included in the exhaust gas. In this case, it is possible to reduce the amount of oxygen introduced into the gas production apparatus 1 (that is, to adjust the concentration of oxygen included in the exhaust gas to be reduced). Therefore, it is possible to deviate the gas composition of the exhaust gas from an explosive range and to prevent the exhaust gas from igniting. In addition, in the gas production apparatus 1, the oxygen removal device consumes a large amount of electric energy. Therefore, it is effective to use electric power as renewable energy which will be described below.

In this case, the concentration of oxygen included in the exhaust gas is preferably adjusted to be less than 1% by volume, more preferably less than 0.5% by volume, and even more preferably less than 0.1% by volume with respect to the entire exhaust gas. This makes it possible to more reliably prevent the exhaust gas from igniting.

The oxygen removal device that removes oxygen included in the exhaust gas can be configured using one or two or more of a low-temperature (cryogenic) separator, a pressure swing adsorption (PSA) separator, a membrane separator, a temperature swing adsorption (TSA) separator, a chemical absorption separator, and a chemical adsorption separator.

In addition, the concentration adjustment unit 5 may adjust the concentration of carbon dioxide such that carbon dioxide is added to the exhaust gas to increase the concentration of carbon dioxide.

The compression unit 6 increases the pressure of the exhaust gas before being supplied to the reactors 4a and 4b. This makes it possible to increase the amount of exhaust gas that can be treated at once in the reactors 4a and 4b. Therefore, it is possible to further improve the conversion efficiency of carbon dioxide into carbon monoxide in the reactors 4a and 4b.

The compression unit 6 can be configured by, for example, a turbo compressor, such as a centrifugal compressor or an axial flow compressor, a displacement compressor, such as a reciprocating compressor, a diaphragm compressor, a single-screw compressor, a twin-screw compressor, a scroll compressor, a rotary compressor, a rotary piston compressor, or a sliding vane compressor, a roots blower (two-leaf blower) that can respond to low pressure, a centrifugal blower, or the like.

Among these compressors, the compression unit 6 is preferably configured by the centrifugal compressor from the viewpoint of ease of increasing the scale of the gas production system 100 and is preferably configured by the reciprocating compressor from the viewpoint of reducing the manufacturing cost of the gas production system 100.

The pressure of the exhaust gas after passing through the compression unit 6 is not particularly limited. However, the pressure of the exhaust gas is preferably 0 to 1 MPaG, more preferably 0 to 0.5 MPaG, and even more preferably 0.01 to 0.5 MPaG. In this case, it is possible to further improve the conversion efficiency of carbon dioxide into carbon monoxide in the reactors 4a and 4b without increasing the pressure resistance of the gas production apparatus 1 more than necessary.

The fine component removal unit 7 removes fine components (for example, a minute amount of unnecessary gas components) included in the exhaust gas.

The fine component removal unit 7 can be configured by, for example, at least one type of treatment device among a gas-liquid separator, a protector (guard reactor), and a scrubber (absorption tower).

In a case where a plurality of treatment devices are used, they are disposed in any order. In a case where a combination of the gas-liquid separator and the protector is used, it is preferable to dispose the gas-liquid separator on the upstream side of the protector. In this case, it is possible to further increase the efficiency of removing fine components from the exhaust gas and to extend the usage period (life) of the protector.

The gas-liquid separator separates, for example, condensed water (liquid) generated when the exhaust gas is compressed by the compression unit 6 from the exhaust gas. In this case, unnecessary gas components and the like remaining in the exhaust gas are dissolved in the condensed water and are removed.

The gas-liquid separator can be configured by, for example, a simple container, a cyclone separator, a centrifugal separator, a surface tension separator, or the like. It is preferable that the gas-liquid separator is configured by the simple container among these types of separators because the simple container has a simple configuration and is inexpensive. In this case, a filter that allows the passage of gas, but prevents the passage of liquid may be disposed at a gas-liquid interface in the container.

Further, in this case, a liquid line may be connected to the bottom of the container, and a valve may be provided in the middle of the liquid line. According to this configuration, the valve can be opened to discharge the condensed water stored in the container to the outside of the gas production apparatus 1 through the liquid line.

Furthermore, the liquid line may be connected to a tank 30, which will be described below, such that the discharged condensed water is reused.

The exhaust gas from which the condensed water has been removed by the gas-liquid separator can be configured to be supplied to, for example, the protector.

It is preferable that the protector includes a substance capable of capturing a component (inactivating component) which is a fine component included in the exhaust gas and comes into contact with the reducing agent 4R to reduce the activity of the reducing agent 4R.

According to this configuration, when the exhaust gas passes through the protector, the substance in the protector can react with (capture) the inactivating component to prevent or suppress the reaching of the inactivating component to the reducing agent 4R in the reactors 4a and 4b for protection (that is, for preventing a reduction in activity). Therefore, it is possible to prevent or suppress a significant reduction in the conversion efficiency of carbon dioxide into carbon monoxide by the reducing agent 4R due to the adverse effect of the inactivating component.

As the substance, a substance having a composition that is included in the reducing agent 4R and comes into contact with the inactivating component to reduce the activity of the reducing agent 4R can be used. For example, a metal oxide that is the same as or similar to the metal oxide included in the reducing agent 4R can be used. Here, the similar metal oxides mean metal oxides that include the same metal element, but have different compositions or metal oxides that include different types of metal elements, but belong to the same group in the periodic table of elements.

In addition, the inactivating component is preferably at least one selected from sulfur, mercury, a sulfur compound, a halogen compound, organic silicone, organic phosphorus, and an organometallic compound and is more preferably at least one selected from sulfur and a sulfur compound. When the inactivating component is removed in advance, it is possible to effectively prevent the activity of the reducing agent 4R from being rapidly reduced.

In addition, the above-described substance may be any substance whose activity is reduced by the same component as the inactivating component of the reducing agent 4R, and metal oxides, such as iron oxide and zinc oxide, are preferable because they have excellent ability to capture the inactivating component.

The protector can have, for example, a configuration in which a mesh material is disposed in a housing and particles of the above-described substance are placed on the mesh material or a configuration in which a honeycomb-shaped filter member made of the above-described substance or a cylindrical or particulate compact is disposed in a housing.

In particular, in a case where the protector is disposed between the compression unit 6 (gas-liquid separator) and the exhaust gas heating unit 10, it is possible to improve the removal efficiency of the inactivating component while preventing deterioration of the above-described substance due to heat.

The exhaust gas heating unit 10 heats the exhaust gas before being supplied to the reactors 4a and 4b. The exhaust gas heating unit 10 preheats the exhaust gas before reaction (before reduction), which makes it possible to further promote the conversion (reduction) reaction of carbon dioxide into carbon monoxide by the reducing agent 4R in the reactors 4a and 4b.

For example, as illustrated in Fig. 2, the exhaust gas heating unit 10 can be configured by an electric heater 101 and a heat exchanger (economizer) 102.

The heat exchanger 102 is configured by bending some of pipes constituting the gas line GL4 (see the following description), through which the gas (mixed gas) after passing through the reactors 4a and 4b is discharged, to be close to pipes constituting the gas line GL1. According to this configuration, since the exhaust gas before being supplied to the reactors 4a and 4b is heated by heat exchange using the heat (sensible heat and/or latent heat) of the high-temperature gas (mixed gas) after passing through the reactors 4a and 4b, it is possible to effectively use heat.

The heat exchanger 102 can be configured by, for example, a jacket heat exchanger, an immersion coil heat exchanger, a double pipe heat exchanger, a shell and tube heat exchanger, a plate heat exchanger, a spiral heat exchanger, or the like.

Further, in the exhaust gas heating unit 10, either the electric heater 101 or the heat exchanger 102 may be omitted.

In the exhaust gas heating unit 10, a combustion furnace or the like may be used instead of the electric heater 101. However, when the electric heater 101 is used, electric power (electric energy) as renewable energy can be used as a power source for the electric heater 101. Therefore, it is possible to reduce a load on the environment.

Electric energy using at least one selected from solar power generation, wind power generation, hydroelectric power generation, wave power generation, tidal power generation, biomass power generation, geothermal power generation, solar heat, and geothermal heat can be used as the renewable energy.

Further, an exhaust gas line may be branched from the gas line GL1 on the upstream side of the exhaust gas heating unit 10 (for example, between the gas-liquid separator and the protector in the middle of the fine component removal unit 7), and a vent portion that is provided outside the gas production apparatus 1 may be connected to an end portion of the exhaust gas line.

In this case, a valve is preferably provided in the middle of the exhaust gas line.

In a case where the internal pressure of the gas production apparatus 1 (gas line GL1) increases more than necessary, the valve can be opened to discharge (release) a portion of the exhaust gas from the vent portion through the exhaust gas line. Therefore, it is possible to prevent damage to the gas production apparatus 1 due to an increase in pressure.

One end portion of the gas line GL2 is connected to the reducing gas supply unit 3. On the other hand, similarly to the gas line GL1, the other end portion of the gas line GL2 is connected to the inlet ports 48 of the reactors 4a and 4b provided in the reaction unit 4 through the gas switching unit 8 and the two gas lines GL3a and GL3b, respectively.

The reducing gas supply unit 3 supplies a reducing gas including a reducing substance that reduces the reducing agent 4R oxidized by contact with carbon dioxide. The reducing gas supply unit 3 according to this embodiment is configured by a hydrogen generation device that generates hydrogen using electrolysis of water, and the tank 30 (reducing gas raw material storage unit) that is provided outside the gas production apparatus 1 and stores water is connected to the hydrogen generation device. The reducing gas including hydrogen (reducing substance) supplied from the hydrogen generation device (reducing gas supply unit 3) is supplied to each of the reactors 4a and 4b through the gas line GL2 by this configuration.

In the following description, hydrogen is given as an example of a second substrate gas that causes the endothermic reaction with the reducing agent 4R.

According to the hydrogen generation device, it is possible to relatively inexpensively and easily generate a large amount of hydrogen. In addition, another advantage is that the condensed water generated in the gas production apparatus 1 can be reused. Further, in the gas production apparatus 1, the hydrogen generation device consumes a large amount of electric energy. Therefore, it is effective to use electric power as the renewable energy described above.

In addition, a device that generates by-product hydrogen can also be used as the hydrogen generation device. In this case, a reducing gas including by-product hydrogen is supplied to each of the reactors 4a and 4b. Examples of the device that generate by-product hydrogen include a device that electrolyzes an aqueous sodium chloride solution, a device for steam reforming of petroleum, and a device that produces ammonia.

Further, the gas line GL2 may be connected to a coke oven outside the gas production apparatus 1 through the connection portion, and exhaust gas from the coke oven may be used as the reducing gas. In this case, the connection portion constitutes the reducing gas supply unit. The reason is that the exhaust gas from the coke oven is mainly composed of hydrogen and methane and includes 50% to 60% by volume of hydrogen.

The reducing gas heating unit 11 is provided in the middle of the gas line GL2. The reducing gas heating unit 11 heats the reducing gas before being supplied to the reactors 4a and 4b. The reducing gas before reaction (before oxidation) in the reducing gas heating unit 11 can be preheated to further promote the reduction (regeneration) reaction of the reducing agent 4R by the reducing gas in the reactors 4a and 4b.

The reducing gas heating unit 11 can be configured in the same manner as the exhaust gas heating unit 10. The reducing gas heating unit 11 is preferably configured by only an electric heater, only a heat exchanger, or a combination of the electric heater and the heat exchanger and is more preferably configured by only the heat exchanger or a combination of the electric heater and the heat exchanger.

When the reducing gas heating unit 11 includes a heat exchanger, the reducing gas before being supplied to the reactors 4a and 4b is heated by heat exchange using the heat of the high-temperature gas (for example, the mixed gas) after passing through the reactors 4a and 4b. Therefore, it is possible to effectively use heat.

According to the above-described configuration, for example, the gas switching unit 8 can switch the gas lines (flow paths) such that, for example, the exhaust gas is supplied to the reactor 4a, in which the reducing agent 4R before oxidation is accommodated, through the gas line GL3a and the reducing gas is supplied to the reactor 4b, in which the reducing agent 4R after oxidation is accommodated, through the gas line GL3b. In this case, a reaction represented by the following Formula 1 proceeds in the reactor 4a, and a reaction represented by the following Formula 2 proceeds in the reactor 4b.

In addition, in the following Formulas 1 and 2, a case where the reducing agent 4R includes a metal oxide (MOₓ₋₁) is given as an example.

Formula 1: CO₂ + MOₓ₋₁ → CO + MOₓ

Formula 2: H₂ + MOₓ → H₂O + MOₓ₋₁

Then, the gas line can be switched by the gas switching unit 8 in a direction opposite to the above to make the reaction represented by the above-described Formula 2 proceed in the reactor 4a and to make the reaction represented by the above-described Formula 1 proceed in the reactor 4b.

In addition, temperature sensors (not illustrated) that measure the temperature of the gas supplied to the reactors 4a and 4b are connected to the middle of the gas lines GL3a and GL3b, respectively.

Gas lines GL4a and GL4b are connected to outlet ports 49 of the reactors 4a and 4b, respectively, and join at a gas joint portion J4 to form one gas line GL4. In addition, valves (not illustrated) are provided in the middle of the gas lines GL4a and GL4b as necessary.

For example, the degrees of opening of the valves can be adjusted to set passage speeds of the exhaust gas and the reducing gas passing through the reactors 4a and 4b (that is, a treatment speed of the exhaust gas by the reducing agent 4R and a treatment speed of the reducing agent 4R by the reducing gas) .

In this embodiment, the reactors 4a and 4b and the gas switching unit 8 constitute the reaction unit 4.

With this configuration, the gases (in this embodiment, mainly carbon monoxide and water vapor) that have passed through each of the reactors 4a and 4b join at the gas joint portion J4 and are mixed, and a mixed gas (combined gas) is formed. Then, the mixed gas passes through one gas line GL4.

Therefore, when a flow path switching state of the gas switching unit 8 (an opening and closing state of the valve) is changed such that different reactions are performed in the reactors 4a and 4b, it is possible to continuously produce the mixed gas. Finally, it is also possible to continuously produce the product gas. In addition, since the same reaction is alternately repeated in the reactors 4a and 4b, it is possible to stabilize the concentration of carbon monoxide included in the mixed gas. As a result, it is also possible to stabilize the concentration of carbon monoxide included in the product gas.

Therefore, the gas production apparatus 1 (gas production system 100) described above can continuously and stably produce carbon monoxide from carbon dioxide, which is industrially advantageous.

Here, in general, it is preferable to adjust the concentration of carbon monoxide included in the mixed gas within a specific range (predetermined percentage by volume with respect to the entire mixed gas). When the concentration is too low, it tends to be difficult to obtain the product gas including a high concentration of carbon monoxide, which depends on the performance of a gas purification unit 9 which will be described below. On the other hand, even when the concentration is increased beyond an upper limit, it is not possible to expect a further increase in the effect of increasing the concentration of carbon monoxide included in the finally obtained product gas.

A product gas discharge unit 40 that discharges the product gas to the outside of the gas production apparatus 1 is connected to an end portion of the gas line GL4 which is opposite to the reactors 4a and 4b.

Further, the gas purification unit 9 is provided in the middle of the gas line GL4.

The gas purification unit 9 purifies carbon monoxide from the mixed gas and recovers the product gas including a high concentration of carbon monoxide. In addition, in a case where the concentration of carbon monoxide in the mixed gas is sufficiently high, the gas purification unit 9 may be omitted.

The gas purification unit 9 can be configured by, for example, at least one type of treatment device among a cooler, a gas-liquid separator, a gas separator, a separation membrane, and a scrubber (absorption tower).

In a case where a plurality of treatment devices are used, the treatment devices are disposed in any order. However, in a case where a combination of the cooler, the gas-liquid separator, and the gas separator is used, it is preferable to dispose them in this order. In this case, it is possible to further increase the efficiency of purifying carbon monoxide from the mixed gas.

The cooler cools the mixed gas. In this way, condensed water (liquid) is generated.

The cooler can be configured to include, for example, a jacket cooling device in which a jacket for allowing the passage of a refrigerant around a pipe is disposed, a multi-tubular cooling device in which a mixed gas is passed through a tube body and a refrigerant passes around the tube body, and an air fin cooler.

The gas-liquid separator separates, from the mixed gas, condensed water generated when the mixed gas is cooled by the cooler. In this case, the condensed water has the advantage of being able to dissolve and remove unnecessary gas components (particularly, carbon dioxide) remaining in the mixed gas.

The gas-liquid separator can be configured in the same manner as the gas-liquid separator of the fine component removal unit 7 and can be preferably configured by a simple container. In this case, a filter that allows the passage of gas, but prevents the passage of liquid may be disposed at a gas-liquid interface in the container.

Further, in this case, a liquid line may be connected to the bottom of the container, and a valve may be provided in the middle of the liquid line. According to this configuration, the valve can be opened to discharge (release) the condensed water stored in the container to the outside of the gas production apparatus 1 through the liquid line.

Furthermore, it is preferable to provide a drain trap on the downstream side of the valve in the middle of the liquid line. In this case, even when the valve malfunctions and carbon monoxide or hydrogen flows to the liquid line, the carbon monoxide or the hydrogen is stored in the drain trap and can be prevented from being discharged to the outside of the gas production apparatus 1. Instead of the drain trap or together with the drain trap, a valve malfunction detection function and redundancy measures for the malfunction of the valve may be provided.

In addition, the liquid line may be connected to the tank 30 such that the discharged condensed water is reused.

The gas separator can be configured by using, for example, one or two or more of a low-temperature (cryogenic) separator, a pressure swing adsorption (PSA) separator, a membrane separator, a temperature swing adsorption (TSA) separator, a separator using a porous coordination polymer (PCP) which is a composite of metal ions (for example, copper ions) and organic ligands (for example, 5-azidoisophthalic acid), and a separator using amine absorption, and the like.

Further, a valve may be provided between the gas-liquid separator and the gas separator in the gas line GL4. In this case, the degree of opening of the valve can be adjusted to regulate the treatment speed of the mixed gas (the production speed of the product gas).

In this embodiment, the concentration of carbon monoxide included in the mixed gas discharged from the gas-liquid separator is 75% to 90% by volume with respect to the total entire mixed gas.

Therefore, in a field in which a product gas including a relatively low concentration (75% to 90% by volume) of carbon monoxide can be used, it is possible to directly supply the mixed gas to the next step without purifying carbon monoxide from the mixed gas. That is, the gas separator can be omitted.

Examples of this field include a field in which valuable substances (for example, ethanol and the like) are synthesized from a product gas by fermentation with microorganisms (for example, clostridium and the like), a field in which steel is manufactured using a product gas as fuel or a reducing agent, a field in which electric devices are manufactured, and a field in which chemical products (phosgene, acetic acid, and the like) having carbon monoxide as a synthetic raw material are synthesized.

Meanwhile, in a field in which it is necessary to use a product gas including a relatively high concentration (more than 90% by volume) of carbon monoxide, carbon monoxide is purified from a mixed gas to obtain a product gas including a high concentration of carbon monoxide.

Examples of this field include a field (blast furnace) in which a product gas is used as a reducing agent, a field in which a product gas is used as fuel to generate electric power using thermal power, a field in which chemical products are manufactured using a product gas as a raw material, and a field of fuel cells in which a product gas is used as fuel.

Each of the reactors 4a and 4b illustrated in Fig. 3 includes a container 41 having a single internal space 410 through which gas can pass, a reducing agent layer (packed bed) 42 with which the internal space 410 is filled and which is configured by the particulate reducing agent 4R, and at least one gas diffusion plate 43 (in this embodiment, three gas diffusion plates 43) that is provided in the middle of the reducing agent layer 42 in a gas passage direction (a vertical direction in Fig. 3) and diffuses gas. In addition, the number of gas diffusion plates 43 provided may be two or four or more.

Further, a support plate 44 that supports the reducing agent layer 42 is provided in the container 41 (internal space 410) .

According to this configuration, it is possible to simplify the configuration of the reactors 4a and 4b. Further, since the entire container 41 can be made of a single material, it is not necessary to consider a difference in thermal expansion coefficient between portions, and a material with high heat resistance can be used as the material forming the container 41. Therefore, the reaction temperature in the reactors 4a and 4b can be sufficiently higher than the reaction temperature in the reactor according to the related art. As a result, it is possible to increase the conversion efficiency of carbon dioxide into carbon monoxide. Similarly, it is also possible to increase the regeneration (reduction) efficiency of the reducing agent 4R by the reducing gas including hydrogen.

The container 41 has a bottomed cylindrical container body 411 that has an opening portion 411a and a lid 412 that is detachably attached to the container body 411 so as to close the opening portion 411a. The container body 411 includes a body portion 411b having one end that is opened in the opening portion 411a and the other end that is closed in a bottom 411c.

Further, the lid 412 is fixed to the container body 411 by, for example, a bolt or the like.

Each of the bottom 411c of the container body 411 and the lid 412 has a dome shape (curved convex shape) and can also have a flat plate shape. In addition, in a case where the bottom 411c is configured to have a flat plate shape, the support plate 44 that supports the reducing agent layer 42 can be omitted.

Further, the inlet port 48 is provided in the vicinity of the vertex of the lid 412, and the outlet port 49 is provided in the vicinity of the vertex of the bottom 411c. The gas supplied from the inlet port 48 passes through the reducing agent layer 42 downward in the internal space 410 and is discharged from the outlet port 49.

The material forming the container 41 (the container body 411, the lid 412, the bolt, and the like) may be selected according to the properties and reactivity of the gas to be passed. However, the material is not particularly limited. Examples of the material include metal materials with high heat resistance such as carbon steel, stainless steel, a nickel alloy, and a molybdenum alloy. Among these metal materials, one type of metal material may be used alone, or a combination of two or more types of metal materials may be used. Since the carbon steel and the stainless steel are relatively inexpensive, it is possible to reduce the manufacturing cost of the reactors 4a and 4b. On the other hand, since the nickel alloy and the molybdenum alloy are expensive, the manufacturing cost of the reactors 4a and 4b can be reduced by simplifying the structure of the container 41 and reducing the amount of nickel alloy and molybdenum alloy used. It is preferable that the container 41 is made of at least one of the carbon steel and the stainless steel among these metal materials. The use of the above-described metal materials makes it possible to increase the reaction temperature in the reactors 4a and 4b to about 850°C.

In a case where the reaction temperature in the reactors 4a and 4b is further increased, the container 41 having the configuration illustrated in Fig. 4 can be adopted. The container 41 illustrated in Fig. 4 has a heat-resistant structure 45 having a heat-resistant temperature higher than the heat-resistant temperature of the container 41 on its inner surface. The heat-resistant structure 45 can be made of, for example, shaped refractories, such as refractory bricks, refractory insulation bricks, and pre-cast blocks, and unshaped refractories such as refractory mortar and castable.

This configuration makes it possible to use the reactors 4a and 4b at a temperature of 700°C to 1200°C (preferably 800°C to 1100°C and more preferably 900°C to 1000°C). Therefore, it is possible to sufficiently increase the conversion efficiency of carbon dioxide into carbon monoxide and the regeneration efficiency of the reducing agent 4R.

In addition, the heat-resistant structure 45 is not limited to the configuration in which it is provided on the entire inner surface of the container 41, but may be provided only on at least a portion thereof (the inner surface of the body portion 411b).

In the container 41, since the inner diameter and height of the body portion 411b (internal space 410) of the container body 411 are set appropriately according to the amount of exhaust gas supplied, they are not particularly limited.

For example, the ratio of the height to the inner diameter (height/inner diameter) is preferably designed to be large (designed to be large in a height direction) from the viewpoint of improving gas dispersibility and is usually designed to be 2 to 10.

The container 41 (single internal space 410) is filled with the particulate (granular) reducing agent 4R to form the reducing agent layer 42. Therefore, in the reducing agent layer 42, spaces between the reducing agents 4R are connected in the horizontal direction (a direction orthogonal to the gas passage direction). According to the reducing agent layer 42, it is possible to increase the filling efficiency of the container 41 and to further increase the contact area with the gas supplied into the container 41.

A volume average particle size of the reducing agent 4R is not particularly limited, but is preferably 1 to 50 mm and more preferably 3 to 30 mm. In this case, it is possible to further increase the contact area between the reducing agent 4R and the exhaust gas (carbon dioxide) and to further improve the conversion efficiency of carbon dioxide into carbon monoxide. Similarly, it is possible to more efficiently perform the regeneration (reduction) of the reducing agent 4R by the reducing gas including hydrogen.

It is preferable that the particulate reducing agent 4R is a molded body produced by tumbling granulation because sphericity is further increased.

Further, the reducing agent 4R may be configured by supporting a metal oxide that reduces carbon dioxide on a carrier.

A material forming the carrier is not particularly limited as long as it is difficult to denature depending on the exhaust gas (source gas), reaction conditions, and the like. Examples of the material include carbon materials (graphite, graphene, and the like), zeolite, montmorillonite, silica (SiO₂), ZrO₂, TiO₂, V₂O₅, MgO, alumina (Al₂O₃), and composite oxides thereof. Among these materials, zeolite, montmorillonite, silica (SiO₂), ZrO₂, TiO₂, V₂O₅, MgO, alumina (Al₂O₃), and composite oxides thereof are preferable as the material forming the carrier.

The carrier made of the above material is preferable because it does not adversely affect the reaction of the metal oxide and has excellent ability to support the metal oxide. Here, the carrier does not participate in the reaction of the metal oxide and simply supports (holds) the metal oxide. An example of this form is a configuration in which at least a portion of a surface of the carrier is coated with a metal oxide.

The metal oxide (oxygen carrier) included in the reducing agent 4R is not particularly limited as long as it can reduce carbon dioxide. The metal oxide preferably includes at least one selected from metal elements belonging to Groups 3 to 12, more preferably includes at least one selected from metal elements belonging to Groups 4 to 12, and even more preferably includes at least one of titanium, vanadium, iron, copper, zinc, nickel, manganese, chromium, cerium, and the like. Metal oxides or composite oxides including iron are particularly preferred. These metal oxides are useful because they have a particularly high conversion efficiency of carbon dioxide into carbon monoxide.

When the container 41 is cut in a direction (horizontal direction) orthogonal to the gas passage direction, the proportion of the cross-sectional area of the reducing agent layer 42 to the cross-sectional area of the internal space 410 (in other words, the proportion of the reducing agent 4R to the cross section of the internal space 410) is not particularly limited, but is preferably equal to or greater than 60%, more preferably equal to or greater than 75%, and even more preferably equal to or greater than 85%. In this case, it is possible to increase the chance of contact between the gas passing through the internal space 410 and the reducing agent 4R.

In addition, the upper limit of the above-described proportion is preferably equal to or less than 99% and more preferably equal to or less than 95%. In this case, it is possible to prevent the passage resistance of the gas passing through the internal space 410 from increasing more than necessary.

The proportion of the volume of the reducing agent layer 42 to the volume of the internal space 410 is preferably 50% to 90%, more preferably 55% to 85%, and even more preferably 60% to 80%. In this case, it is possible to increase the chance of the contact between the gas passing through the internal space 410 and the reducing agent 4R while preventing the passage resistance of the gas passing through the internal space 410 from increasing more than necessary.

A peripheral edge of the support plate 44 is locked to a boundary portion (shoulder portion) between the body portion 411b and the bottom 411c. Therefore, the support plate 44 is positioned relative to the container body 411 in the gas passage direction. The support plate 44 can be configured by, for example, a perforated plate having a plurality of through holes, a mesh material, or the like.

The gas diffusion plate 43 has a function of diffusing the gas passing through the reducing agent layer 42 to be uniformized in an in-plane direction (horizontal direction). The disposition of the gas diffusion plate 43 makes it possible to bring the gas passing through the internal space 410 and the reducing agent 4R into uniform contact with each other. The gas diffusion plate 43 can be configured by, for example, a perforated plate having a plurality of through holes or the like.

As illustrated in Fig. 3, the gas diffusion plate 43 is separated from the container 41 (container body 411). In addition, as described above, the peripheral edge of the support plate 44 is locked to the boundary portion (shoulder portion) between the body portion 411b and the bottom 411c. That is, neither the gas diffusion plate 43 nor the support plate 44 is fixed to the container 41. Therefore, even when there is a large difference between the thermal expansion coefficients of the gas diffusion plate 43 and the support plate 44 and the thermal expansion coefficient of the container 41, the reactors 4a and 4b are unlikely to be damaged by heating or heat generation during gas reaction.

Further, the gas diffusion plate 43 may be disposed on the upstream side of the reducing agent layer 42 in the gas passage direction. Furthermore, the gas diffusion plate 43 provided in the middle of the reducing agent layer 42 in the gas passage direction may be omitted.

Moreover, the volumes of the two reactors 4a and 4b are set to be approximately equal to each other and are appropriately set according to the amount of exhaust gas treated (the size of the furnace 20 and the size of the gas production apparatus 1).

In addition, a plurality of temperature sensors 4T1 to 4T4 that measure the temperature of a plurality of (in this embodiment, four) measurement points of the reducing agent layer (packed bed) 42 along the gas passage direction are connected to the reactors 4a and 4b.

In the present invention, the reducing agent 4R (metal oxide) and the gas (the exhaust gas or the reducing gas) cause an exothermic reaction or an endothermic reaction involving the exchange of oxygen elements.

Since the reaction between the reducing agent 4R and the gas (substrate gas) is not a catalytic reaction, but is a substrate reaction, the reducing agent 4R causes a structural change by taking in or releasing the oxygen element. Then, when the amount of oxygen element taken in or released by the reducing agent 4R is saturated, the reducing agent 4R is not capable of taking in or releasing any more oxygen element, and the activity of the reducing agent 4R is reduced or disappears (the reaction ends).

Fig. 5 illustrates an example of the endothermic reaction. When the supply of gas (reducing gas) to the reactors 4a and 4b is started, the temperature measured by the temperature sensor 4T1 connected to the measurement point on the most upstream side in the gas passage direction decreases with the progress of the reaction (endothermic reaction) of the reducing agent 4R, reaches a peak, rises due to the disappearance of the activity of the reducing agent 4R, and is then kept constant.

Then, the temperature measured by the temperature sensor 4T2, the temperature measured by the temperature sensor 4T3, and the temperature measured by the temperature sensor 4T4 sequentially change in the same way as the temperature measured by the temperature sensor 4T1. That is, the position of the peak moves from the upstream side to the downstream side.

Therefore, the usage limit of the reactors 4a and 4b can be known by checking which measurement point a temperature change occurs in the temperature sensor connected to at present.

In addition, in a catalytic reaction, the temperature change illustrated in Fig. 5 does not occur in a catalyst layer with which the container is filled.

Here, as illustrated in Fig. 3, when the length (hereinafter, also referred to as a "thickness") of the reducing agent layer 42 along the gas passage direction is H, an interval S between adjacent measurement points is equal to or less than H/3, preferably equal to or less than H/4, and more preferably H/5 to H/30. In this case, it is possible to more accurately know the usage limit of the reactors 4a and 4b.

The absolute value of a difference (temperature change) between the average value of the temperature of the reducing agent layer 42 measured at a plurality of measurement points before the supply of gas to the reactors 4a and 4b is started and the maximum fluctuation value Max of the temperature of the reducing agent layer 42 measured at each measurement point after the supply of gas to the reactors 4a and 4b is started is preferably equal to or less than 200°C, more preferably equal to or less than 150°C, and even more preferably equal to or less than 100°C. The temperature change of the reducing agent layer 42 within the above range makes it possible to prevent a temperature load more than necessary from being applied to the reactors 4a and 4b.

In addition, the lower limit of the temperature change is not particularly limited, but is preferably equal to or greater than 10°C and more preferably equal to or greater than 30°C.

In the case of the reaction (exothermic reaction) between the reducing agent 4R and the exhaust gas, the average value is preferably 550°C to 1000°C, more preferably 600°C to 900°C, and even more preferably 650°C to 800°C.

On the other hand, in the case of the reaction (endothermic reaction) between the reducing agent 4R and the reducing gas, the average value is preferably 580°C to 1100°C, more preferably 630°C to 1050°C, and even more preferably 680°C to 1000°C.

Further, the temperature changes measured by some temperature sensors may deviate from the above range.

It is preferable to degrade the characteristics of the reducing agent 4R (the degree of oxidation-reduction reaction) in order to set the temperature changes measured by each of the temperature sensors 4T1 to 4T4 within the above range. This can be achieved by, for example, adding, to the reducing agent layer 42 (reducing agent 4R), a diluent that makes the number of oxygen elements contributing to the exchange per unit volume of the entire reducing agent layer 42 smaller than the number of oxygen elements contributing to the exchange per unit volume of only the metal oxide of the reducing agent 4R.

Specifically, the above-described carrier may be configured by the diluent. Examples of the diluent include carbon materials (graphite, graphene, and the like), zeolite, montmorillonite, silica (SiO₂), ZrO₂, TiO₂, V₂O₅, MgO, alumina (Al₂O₃), and composite oxides thereof. Among these materials, zeolite, montmorillonite, silica (SiO₂), ZrO₂, TiO₂, V₂O₅, MgO, alumina (Al₂O₃), and composite oxides thereof are preferable as the diluent.

In this case, the content of the diluent in the reducing agent 4R (reducing agent layer 42) is preferably 30% to 95% by mass and more preferably 70% to 90% by mass.

Next, a method (operation) for using the gas production system 100 according to the first embodiment, that is, a gas production method will be described.
[1] First, the gas switching unit 8 switches the gas lines (flow paths) such that the connection portion 2 and the reactor 4a communicate with each other and the reducing gas supply unit 3 and the reactor 4b communicate with each other.
[2] Then, in this state, the supply of the exhaust gas from the furnace 20 through the connection portion 2 is started.
   The exhaust gas supplied from the furnace 20 is generally at a high temperature of 50°C to 300°C and is cooled to 30°C to 50°C before reaching the concentration adjustment unit 5.
[3] Then, the exhaust gas passes through the oxygen removal device (concentration adjustment unit 5). Therefore, oxygen is removed from the exhaust gas, and the concentration of carbon dioxide included in the exhaust gas increases.
[4] Then, the exhaust gas passes through the compression unit 6. Therefore, the pressure of the exhaust gas increases.
[5] Then, the exhaust gas passes through the fine component removal unit 7. Therefore, condensed water generated when the exhaust gas is compressed by the compression unit 6 and inactivating components that reduce the activity of the reducing agent 4R are removed from the exhaust gas.
[6] Then, the exhaust gas passes through the exhaust gas heating unit 10. Therefore, the exhaust gas is heated.
[7] Then, the exhaust gas is supplied to the reactor 4a. In the reactor 4a, carbon dioxide in the exhaust gas is reduced to carbon monoxide by the reducing agent 4R. At this time, the reducing agent 4R is oxidized.

The heating temperature of the exhaust gas in the step [6] is preferably set to be 30°C or more (preferably about 50°C to 100°C) lower than the heating temperature of the reducing gas in the following step [9]. Therefore, it is possible to prevent the temperature of the reducing agent layer 42 of the reactor 4a from being unnecessarily high in the above-described reaction. As a result, it is possible to suppress the alteration and deterioration of the reducing agent 4R.

A specific value of the heating temperature of the exhaust gas in the step [6] is preferably 550°C to 1000°C, more preferably 600°C to 900°C, and even more preferably 650°C to 800°C. When the heating temperature of the exhaust gas is set within the above range, for example, the reduction reaction of carbon dioxide (first substrate gas) in the reactor 4a can proceed more smoothly.

Further, the temperature of the reducing agent layer 42 of the reactor 4a at the time of the start of the step [7] is preferably set to be 30°C or more (preferably about 50°C to 100°C) lower than the temperature of the reducing agent layer 42 of the reactor 4b at the time of the start of the following step [9]. A specific value of the temperature of the reducing agent layer 42 of the reactor 4a is equal to the specific value of the heating temperature of the exhaust gas. Therefore, the same effect as described above is obtained.

[8] In parallel with the steps [2] to [7], water (reducing gas raw material) is supplied from the tank 30 to the hydrogen generation device (reducing gas supply unit 3), and hydrogen is generated from the water.

[9] Then, the reducing gas including the hydrogen passes through the reducing gas heating unit 11. Therefore, the reducing gas is heated.

[10] Then, the reducing gas is supplied to the reactor 4b. In the reactor 4b, the reducing agent 4R in the oxidized state is reduced (regenerated) by the reducing gas (hydrogen as the second substrate gas).

Each of the heating temperature of the reducing gas in the step [9] and the temperature of the reducing agent layer 42 of the reactor 4b at the time of the start of the step [7] is preferably 580°C to 1100°C, more preferably 630°C to 1050°C, and even more preferably 680°C to 1000°C. When each of the heating temperature of the reducing gas and the temperature of the reducing agent layer 42 of the reactor 4b is set within the above range, for example, it is possible to prevent or suppress a sudden drop in the temperature of the reducing agent 4R due to the endothermic reaction when the reducing agent 4R in the oxidized state is reduced (regenerated). Therefore, the reduction reaction of the reducing agent 4R in the reactor 4b can proceed more smoothly.

In this embodiment, for example, the switching timing of the gas line in the gas switching unit 8, that is, the switching timing between the exhaust gas (first substrate gas) and the reducing gas (second substrate gas) supplied to the reactors 4a and 4b can be set as follows.

For example, the switching timing can be when the temperature sensor 4T4 can measure the temperature of the measurement point located between H/5 and H/20 from a downstream-side end of the reducing agent layer (packed bed) 42 in the gas passage direction and a change in the temperature of this measurement point is equal to or greater than 40% of the temperature change measured at the measurement point on the most upstream side in the reducing agent layer 42 in the gas passage direction. Therefore, it is possible to more accurately know the usage limit of the reactors 4a and 4b. Since the reactors 4a and 4b are switched at an appropriate timing, it is possible to increase the concentration of carbon monoxide included in the mixed gas and to stabilize the concentration.

The measurement point (separation distance D) on the most downstream side (the lowest side in the drawings) is preferably H/8 to H/17 and more preferably H/10 to H/15. It is possible to more appropriately set the switching timing between the exhaust gas and the reducing gas to be supplied to the reactors 4a and 4b.

Further, the switching timing is preferably when a change in the temperature of the measurement point on the most downstream side is equal to or greater than 50% of the temperature change measured at the measurement point on the most upstream side, more preferably when it is equal to or greater than 60% of the temperature change, and even more preferably when it is equal to or greater than 70% of the temperature change. This switching timing between the exhaust gas and the reducing gas supplied to the reactors 4a and 4b makes it possible to fully utilize the characteristics of the reducing agent 4R. In addition, the switching timing is preferably when a change in the temperature of the measurement point on the most downstream side reaches 95% of the temperature change measured at the measurement point on the most upstream side and more preferably when it reaches 90% of the temperature change. In this case, it is possible to reduce the amount of gas that is not capable of contributing to the reaction.

In addition, the switching timing can be, for example, when the reaction amount of the reducing agent 4R (metal oxide) is calculated from the sum of temperature changes at a plurality of measurement points measured by the temperature sensors 4T1 to 4T4 and the calculated reaction amount reaches a predetermined value. In this case, it is possible to more accurately know the usage limit of the reactors 4a and 4b. Since the reactors 4a and 4b can be switched at an appropriate timing, it is possible to increase the concentration of carbon monoxide included in the mixed gas and to stabilize the concentration.

Here, when a state in which the reaction is completely finished is set as "100", the predetermined value is preferably equal to or greater than 50, more preferably equal to or greater than 60, and even more preferably equal to or greater than 70.

Further, the number of measurement points is not limited to four and may be three or five or more. The number of measurement points is appropriately set according to the thickness H of the reducing agent layer 42.

[11] Then, the gases that have passed through the reactors 4a and 4b are combined to generate a mixed gas. At this time, the temperature of the mixed gas is usually 600°C to 1000°C. When the temperature of the mixed gas at this time is within the above range, it means that the temperature in the reactors 4a and 4b is maintained at a sufficiently high temperature, and it can be determined that the conversion of carbon dioxide into carbon monoxide by the reducing agent 4R and the reduction of the reducing agent 4R by the reducing gas are proceeding efficiently.

[12] Then, the mixed gas is cooled to 100°C to 300°C before reaching the gas purification unit 9.

[13] Then, the mixed gas passes through the gas purification unit 9. Therefore, for example, the generated condensed water, carbon dioxide dissolved in the condensed water, and the like are removed. As a result, carbon monoxide is purified from the mixed gas, and a product gas including a high concentration of carbon monoxide is obtained.

In addition, the temperature of the obtained product gas is 20°C to 50°C.

[14] Then, the product gas is discharged from the product gas discharge unit (gas recovery unit) 40 to the outside of the gas production apparatus 1 and is used for the next step.

### <Reducing Agent Layer Temperature Control Unit>

The reactors 4a and 4b may be provided with a reducing agent layer temperature control unit.

Fig. 6 is a cross-sectional view schematically illustrating a configuration of the reactor including the reducing agent layer temperature control unit.

The reducing agent layer temperature control unit illustrated in Fig. 6 includes one tube body 401 that is provided to be in contact with (to penetrate) the reducing agent layer 42 and transfers a temperature control medium that adjusts the temperature of the reducing agent layer 42.

The reducing agent layer temperature control unit further includes a circulating medium line 402 that is connected to both end portions of the tube body 401, and the medium line 402 is filled with the temperature control medium.

Then, a transfer device 403 that transfers the temperature control medium and a temperature control device 404 that adjusts (heats or cools) the temperature of the temperature control medium are provided in the middle of the medium line 402.

According to this configuration, when the temperature control medium whose temperature has been adjusted by the temperature control device 404 circulates through the medium line 402, the reducing agent layer 42 can be indirectly heated or cooled through the tube body 401. Therefore, even in an emergency situation in which the temperature of the reducing agent layer 42 rises or falls excessively, it is possible to adjust the temperature of the reducing agent layer 42 to a target temperature.

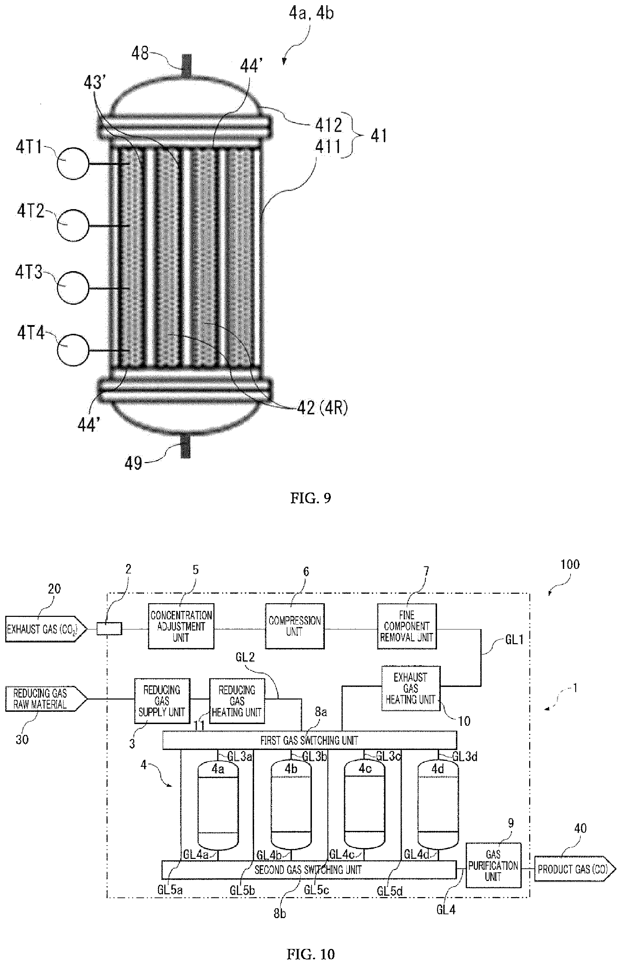

Even in a case where the tube body 401 is disposed, the area of the space through which the temperature control medium passes per cross-sectional area of the container 41 can be sufficiently less than that in a multi-tubular reactor illustrated in Fig. 9.

A material forming the tube body 401 is preferably a material having a thermal expansion coefficient that is equal to or approximately equal to that of the material forming the container 41 and more preferably the same material as the material forming the container 41.

Further, in a case where materials having different thermal expansion coefficients are used as the materials forming the tube body 401 and the container 41, it is preferable to introduce a mechanism that absorbs or relieves stress caused by a difference in expansion between the materials.

In addition, two or more tube bodies 401 may be disposed.

Examples of the temperature control medium include gas and liquid (including viscous liquid).

Furthermore, in a case where gas is used as the temperature control medium, the transfer device 403 can be configured by a blower. Moreover, in a case where liquid is used as the temperature control medium, the transfer device 403 can be configured by a pump.

### <Other Configurations of Gas Heating Unit (Preheating Structure)>

Fig. 1 illustrates the exhaust gas heating unit 10 and the reducing gas heating unit 11 installed on the upstream side of the gas switching unit 8 as the gas heating units that heat the gas (the exhaust gas and the reducing gas) before passing through the reducing agent layer 42. In the present invention, instead of or in combination with these units, desired gas heating units may be installed in the branch gas lines constituting the gas switching unit 8 or the gas lines connected to the inlet ports 48 of the reactors 4a and 4b such as the gas lines GL3a and GL3b immediately before the reactors 4a and 4b. In addition, the same applies to configurations illustrated in Figs. 10, 15, and 17 which will be described below.

The installation of the gas heating units at these positions makes it possible to supply gas suitable for the reaction temperature set in each of the reactors 4a and 4b even in a case where the temperature of gas is likely to fluctuate due to the exothermic reaction or the endothermic reaction in each of the reactors 4a and 4b.

In this case, the gas heating unit can be configured by at least one selected from the same heat exchanger and electric heater as those illustrated in Fig. 2 and a microwave irradiator which will be described below.

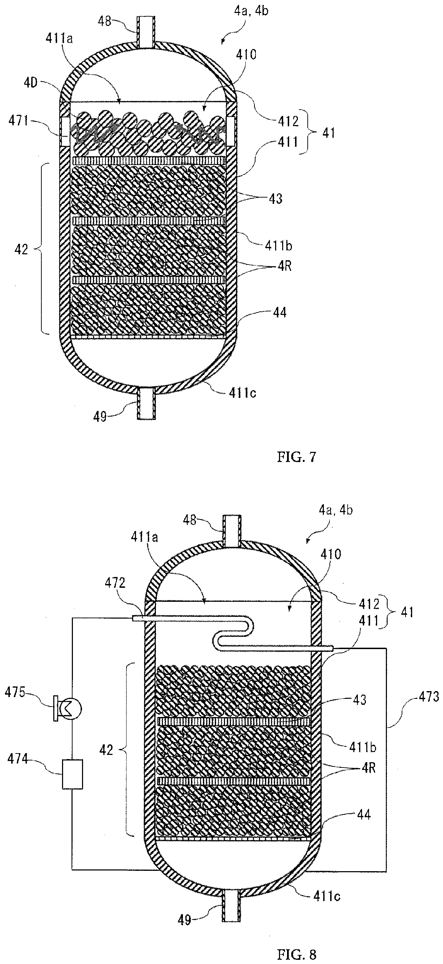

Further, the gas heating units can also be incorporated into the reactors 4a and 4b. Specifically, structures illustrated in Figs. 7 and 8 are given as an example. However, the gas heating unit is not limited to these structures. Figs. 7 and 8 are vertical cross-sectional views schematically illustrating other configurations of the gas heating unit. In addition, in Figs. 7 and 8, the temperature sensors 4T1 to 4T4 are not illustrated.

The gas heating unit illustrated in Fig. 7 includes a thermal conductor 4D with which the internal space 410 on the upstream side of the reducing agent layer 42 in the gas passage direction is filled and a microwave irradiator 471 that is provided in the container body 411 and can emit microwaves for heating the thermal conductor 4D.

According to this configuration, it is possible to uniformly heat up to the center of the thermal conductor 4D in a relatively short time. Moreover, it is easy to precisely control the heating temperature of the thermal conductor 4D. Therefore, it is possible to quickly heat the exhaust gas and the reducing gas to a desired temperature.

Examples of a material forming the thermal conductor 4D include carbon materials (graphite, graphene, and the like), zeolite, montmorillonite, silica (SiO₂), ZrO₂, TiO₂, V₂O₅, MgO, alumina (Al₂O₃), and composite oxides thereof. Among these materials, zeolite, montmorillonite, silica (SiCt), ZrO₂, TiO₂, V₂O₅, MgO, alumina (Al₂O₃), and composite oxides thereof are preferable. In particular, in a case where microwaves are used, a material that has low reactivity with gas and high microwave absorption ability is selected as the material forming the thermal conductor 4D.

It is preferable that the thermal conductor 4D has, for example, a particulate shape (granular shape), a scale shape, a pellet shape, or the like. When the thermal conductor 4D has this shape, it is possible to further increase the contact area with the gas supplied into the internal space 410.

In a case where the heating efficiency and passage efficiency of gas are considered, it is preferable that the volume average particle size of the thermal conductor 4D is larger than the volume average particle size of the reducing agent 4R.

The volume average particle size of the thermal conductor 4D is not particularly limited, but is preferably 5 to 100 mm and more preferably 10 to 70 mm.

The microwaves mean electromagnetic waves with a frequency of 300 MHz to 300 GHz and are classified into ultrahigh frequency waves (UHF) with a frequency of 300 to 3000 MHz, centimeter waves (SHF) with a frequency of 3 to 30 GHz, millimeter waves (EHF) with a frequency of 30 to 300 GHz, and submillimeter waves (SHF) with a frequency of 300 to 3000 GHz. Among these waves, the ultrahigh frequency waves (UHF) are preferable as the microwaves. The use of the ultrahigh frequency waves (UHF) makes it possible to heat the thermal conductor 4D to a target temperature in a shorter time.

In a case where microwaves are emitted, measures against the leakage of radio waves in accordance with the Radio Law are appropriately taken for the container 41.

Furthermore, the microwaves may be emitted continuously or intermittently (as pulses).

The microwave irradiator 471 may be disposed in the lid 412 instead of the container body 411, may be disposed in the internal space 410, or may be disposed outside the container 41.

As described above, when the gas composition of the exhaust gas is kept away from the explosive range by the concentration adjustment unit 5, it is possible to suitably prevent the microwave irradiator from being a source to ignite the exhaust gas, regardless of the irradiation conditions of the microwaves.

Further, since electric energy is used as a power source for the microwave irradiator 471, there is an advantage that the electric energy can be easily switched to renewable energy.

The gas heating unit illustrated in Fig. 8 includes one tube body 472 that is separated from the reducing agent layer 42, is provided to pass through the internal space 410 on the upstream side of the reducing agent layer 42 in the gas passage direction, and transfers a heat medium.

The gas heating unit further includes a circulating medium line 473 that is connected to both end portions of the tube body 472, and the medium line 473 is filled with a medium.

In addition, a transfer device 474 that transfers the medium and a heating device 475 that heats the medium are provided in the middle of the medium line 473.

According to this configuration, when the medium heated by the heating device 475 circulates through the medium line 473, it is possible to indirectly heat the gas, which passes through a space above the reducing agent layer 42 in the internal space 410 (that is, the gas before passing through the reducing agent layer 42), through the tube body 472.

A material forming the tube body 472 is preferably a material having a thermal expansion coefficient that is equal to or approximately equal to that of the material forming the container 41 and more preferably the same material as the material forming the container 41.

Further, in a case where materials having different thermal expansion coefficients are used as the materials forming the tube body 472 and the container 41, it is preferable to introduce a mechanism that absorbs or relieves stress caused by a difference in expansion between the materials.

In addition, two or more tube bodies 472 may be disposed.

Examples of the medium include gas and liquid (including viscous liquid).

The heating device 475 can be configured by only an electric heater or can also be configured by an electric heater and a heat exchanger similar to that described in the exhaust gas heating unit 10.

According to the latter configuration, since the medium before being supplied to the reactors 4a and 4b is heated by heat exchange using the heat of the high-temperature gas after passing through the reactors 4a and 4b, it is possible to effectively use heat.

In addition, in a case where gas is used as the medium, the transfer device 474 can be configured by a blower. Furthermore, in a case where liquid is used as the medium, the transfer device 474 can be configured by a pump.

### <Other Configurations of Reactor>

Fig. 9 is a schematic diagram illustrating another configuration of the reactor.

Each of the reactors 4a and 4b illustrated in Fig. 9 is configured by a multi-tubular reactor (shell and tube reactor) include a plurality of tube bodies 43' each of which is filled with the reducing agent layer 42 (reducing agent 4R), a container 41 that accommodates the plurality of tube bodies 43', and a pair of tube plates 44' that fix each tube body 43' to the container 41.

Further, the temperature sensors 4T1 to 4T4 are disposed to measure the temperature of each of a plurality of (in this embodiment, four) measurement points of the reducing agent layer (packed bed) 42, with which one tube body 43' is filled, in the passage direction of the gas (the exhaust gas or the reducing gas).

The same operation and effect as those of the reactors 4a and 4b illustrated in Fig. 3 are obtained from the reactors 4a and 4b illustrated in Fig. 9.

### <Products>

In the product gas produced using the gas production apparatus 1 and the gas production system 100, in general, the concentration of carbon monoxide is equal to or greater than 60% by volume, preferably equal to or greater than 75% by volume, and even more preferably equal to or greater than 90% by volume.

In addition, the above-described product gas can be used in the field in which valuable substances (for example, ethanol and the like) are synthesized by fermentation with microorganisms (for example, clostridium and the like), the field in which steel is manufactured using fuel or a reducing agent, the field in which electric devices are manufactured, the field in which chemical products (phosgene, acetic acid, and the like) having carbon monoxide as a synthetic raw material are produced, the field (blast furnace) in which the product gas is used as a reducing agent, the field in which the product gas is used as fuel to generate electric power using thermal power, and the field of fuel cells in which the product gas is used as fuel.

### <Second Embodiment>

Next, a second embodiment of the present invention will be described.

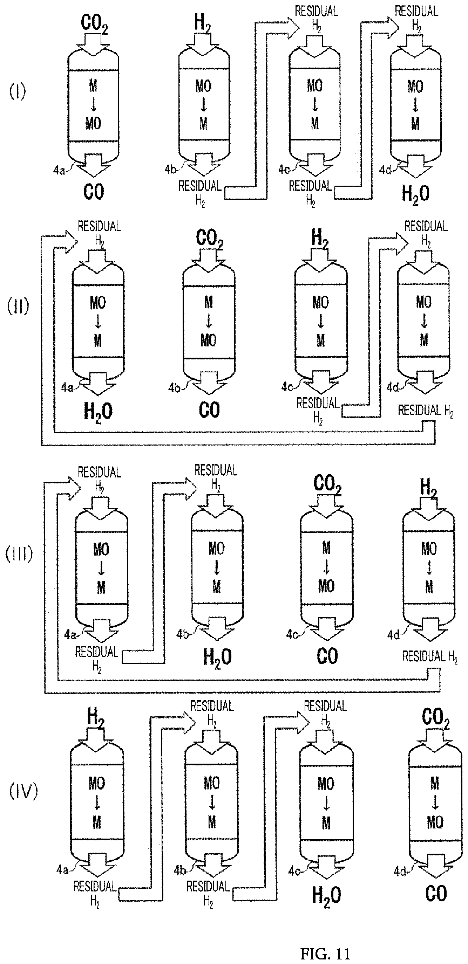

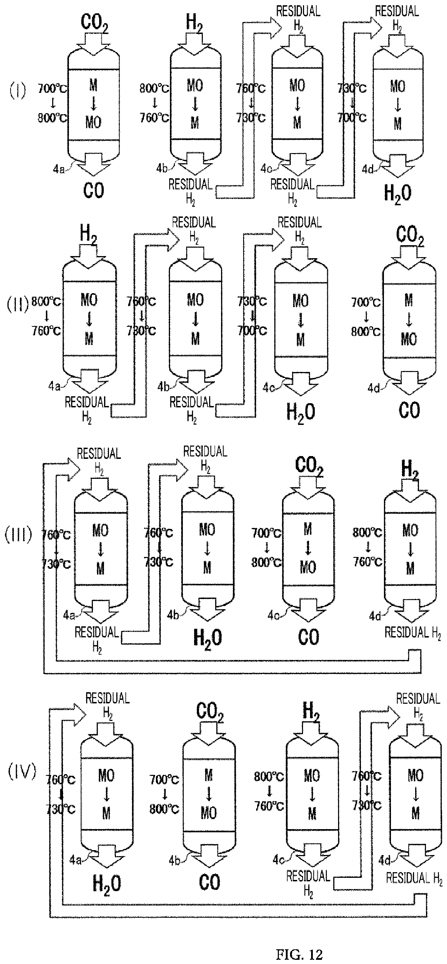

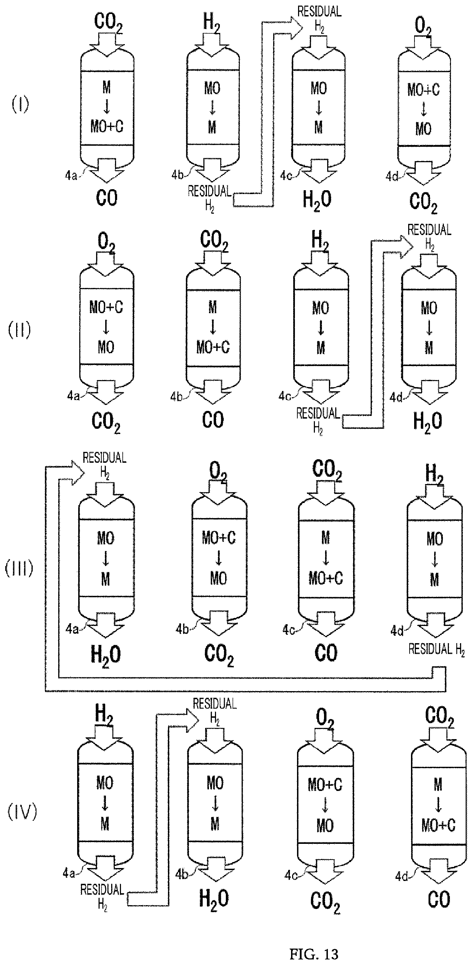

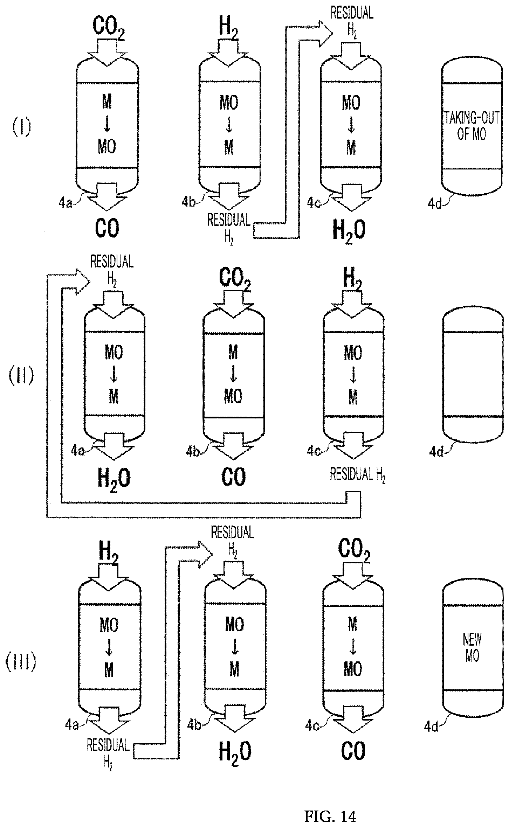

Fig. 10 is a schematic diagram illustrating the second embodiment of the gas production system according to the present invention. Figs. 11 and 12 are schematic diagrams illustrating a method for switching gases to pass through reactors in the second embodiment. Fig. 13 is a schematic diagram illustrating a method for regenerating a reducing agent in the second embodiment. Fig. 14 is a schematic diagram illustrating a method for replacing the reducing agent or overhauling the reactors in the second embodiment. In addition, in Figs. 10 to 14, the temperature sensors 4T1 to 4T4 are not illustrated.

Hereinafter, the gas production system according to the second embodiment will be described, with a focus on the differences from the gas production system according to the first embodiment. A description of the same configurations will be omitted.

The gas production system according to the second embodiment is the same as the gas production system according to the first embodiment except for a configuration of a reaction unit.

A reaction unit 4 illustrated in Fig. 10 has four reactors 4a to 4d. The configurations of the reactors 4a to 4d can be the same as the configurations of the reactors 4a and 4b described in the first embodiment.

An end portion of a gas line GL1 which is opposite to the connection portion 2 is connected to inlet ports 48 of the reactors 4a to 4d through a first gas switching unit 8a and four gas lines GL3a to GL3d, respectively.

The exhaust gas supplied from the furnace 20 through the connection portion 2 is supplied to each of the reactors 4a to 4d through the gas line GL1 by this configuration.

The configuration of the first gas switching unit 8a can be the same as the configuration of the gas switching unit 8 described in the first embodiment.

An end portion of a gas line GL2 which is opposite to the reducing gas supply unit 3 is connected to the inlet ports 48 of the reactors 4a to 4d through the first gas switching unit 8a and the four gas lines GL3a to GL3d, respectively, similarly to the gas line GL1.

Gas lines GL4a to GL4d are connected to the outlet ports 49 of the reactors 4a to 4d, respectively, join at a second gas switching unit 8b, and form one gas line GL4. In addition, a valve (not illustrated) is provided in the middle of each of the gas lines GL4a to GL4d as necessary.

In this embodiment, the reaction unit 4 is configured by the reactors 4a to 4d, the first gas switching unit 8a, and the second gas switching unit 8b.

Furthermore, the reaction unit 4 according to this embodiment has four gas lines GL5a to GL5d that connect the first gas switching unit 8a and the second gas switching unit 8b.

With this configuration, the first gas switching unit 8a and the second gas switching unit 8b can switch the gas lines (flow paths) such that, for example, the exhaust gas (first substrate gas) is supplied to one of the reactors 4a to 4d and passes therethrough and the reducing gas (second substrate gas) is continuously supplied to the remaining three reactors among the reactors 4a to 4d and passes therethrough in this order.

In this embodiment, among the plurality of reactors 4a to 4d, one reactor to which the exhaust gas is supplied is a first reactor. When the exhaust gas is supplied to the first reactor, the three reactors to which the reducing gas is continuously supplied are second reactors.

Specifically, in a first turn illustrated in Fig. 11(I), the exhaust gas (carbon dioxide) can be supplied to the reactor (first reactor) 4a through the gas line GL3a. The exhaust gas (carbon monoxide) that has passed through the reactor 4a can be discharged through the gas line GL4a.

On the other hand, in the remaining reactors 4b to 4d, first, the reducing gas (hydrogen) can be supplied to the reactor (first second reactor) 4b through the gas line GL3b. Then, the reducing gas (residual hydrogen) that has passed through the reactor 4b can be supplied to the reactor (second second reactor) 4c through the gas line GL4b, the gas line GL5c, and the gas line GL3c. Then, the reducing gas (residual hydrogen) that has passed through the reactor 4c can be supplied to the reactor (third second reactor) 4d through the gas line GL4c, the gas line GL5d, and the gas line GL3d. Then, the reducing gas (water) that has passed through the reactor 4d can be discharged through the gas line GL4d.

Then, in a second turn illustrated in Fig. 11(II), the exhaust gas can be supplied to the reactor (first reactor) 4b and can pass therethrough. On the other hand, the reducing gas can be continuously supplied to the reactors (second reactors) 4c, 4d, and 4a and can pass therethrough in this order.

Then, in a third turn illustrated in Fig. 11(III), the exhaust gas can be supplied to the reactor (first reactor) 4c and can pass therethrough. On the other hand, the reducing gas can be continuously supplied to the reactors (second reactors) 4d, 4a, and 4b and can pass therethrough in this order.

Then, in a fourth turn illustrated in Fig. 11(IV), the exhaust gas can be supplied to the reactor (first reactor) 4d and can pass therethrough. On the other hand, the reducing gas can be continuously supplied to the reactors (second reactors) 4a, 4b, and 4c and can pass therethrough in this order.

In this embodiment, a series of operations from the first to fourth turns is regarded as one cycle and can be repeated in a plurality of cycles to continuously and stably convert carbon dioxide into carbon monoxide.

For example, in a case where the reducing agent 4R, in which the reduction efficiency of an oxidized state by hydrogen (reducing substance) is lower than the conversion efficiency of carbon dioxide into carbon monoxide, is used, when the reducing gas passes through one reactor only once, there is a concern that hydrogen (residual hydrogen) that is not capable of being used to reduce the reducing agent 4R in the oxidized state will be wasted. In contrast, in this embodiment, the reducing gas can continuously pass through three reactors. In other words, the reducing gas can pass through one reactor three times. Therefore, it is possible to prevent hydrogen (reducing gas) from being wasted.

Furthermore, in this embodiment, the reaction between the exhaust gas and the reducing agent 4R is an exothermic reaction, and the reaction between the reducing gas and the reducing agent 4R is an endothermic reaction. Therefore, the exhaust gas and the reducing gas can also be used in a pattern illustrated in Fig. 12.

That is, in the pattern illustrated in Fig. 12, for example, setting is performed as follows: when the exhaust gas at a temperature of 700°C passes through the reactor, it is heated to 800°C by the exothermic reaction; when the reducing gas at a temperature of 800°C passes through the reactor in a first stage, it is cooled to 760°C by the endothermic reaction; when the reducing gas passes through the reactor in a second stage, it is cooled to 730°C by the endothermic reaction; and when the reducing gas passes through the reactor in a third stage, it is cooled to 700°C by the endothermic reaction.

In this case, when a first turn illustrated in Fig. 12(I) ends, the temperature of the reducing agent layer 42 of the reactor 4a is 800°C, the temperature of the reducing agent layer 42 of the reactor 4b is 760°C, the temperature of the reducing agent layer 42 of the reactor 4c is 730°C, and the temperature of the reducing agent layer 42 of the reactor 4d is 700°C.

Therefore, the temperature of the reducing agent layer 42 of the reactor 4d is a temperature suitable for supplying the exhaust gas, and the temperature of the reducing agent layer 42 of the reactor 4a is a temperature suitable for supplying the first (fresh) reducing gas.

Therefore, in a second turn illustrated in Fig. 12(II), the exhaust gas passes through the reactor 4d, and the reducing gas passes through the reactor 4a, the reactor 4b, and the reactor 4c in this order.

Then, in a third turn illustrated in Fig. 12(III), the exhaust gas passes through the reactor 4c, and the reducing gas passes through the reactor 4d, the reactor 4a, and the reactor 4b in this order.

In a fourth turn illustrated in Fig. 12(IV), the exhaust gas passes through the reactor 4b, and the reducing gas passes through the reactor 4c, the reactor 4d, and the reactor 4a in this order.

According to this configuration, the reducing agent 4R can be heated to a temperature suitable for the reaction with the reducing gas by reaction heat caused by the exothermic reaction between the exhaust gas and the reducing agent 4R. On the other hand, the reducing agent 4R can be cooled to a temperature suitable for reaction with the exhaust gas by reaction heat caused by the endothermic reaction between the reducing gas and the reducing agent 4R. Therefore, it is possible to increase the thermal efficiency of the entire gas production apparatus 1.

In addition, in a case where the temperature of the reducing gas is lower than necessary due to some factors, the reducing gas may be reheated by the above-described gas heating unit (preheating structure). Further, in a case where this phenomenon does not occur, the reheating by the gas heating unit can be omitted, which is preferable.

Furthermore, in a case where the temperature of the reducing agent layer 42 of the reactor to be switched from the reducing gas to the exhaust gas is not a temperature suitable for supplying the exhaust gas (for example, in a case where the temperature is high), the reducing gas at a temperature (at a low temperature) lower than this temperature may be supplied for cooling.

Further, since three or more reactors are used, it is possible to provide a reactor that does not allow the passage of the exhaust gas and the reducing gas. Therefore, it is possible to perform other operations on the reactor that is not used for a normal operation for producing the product gas (carbon monoxide) while continuing the normal operation.

For example, when carbon dioxide is converted into carbon monoxide (carbon valuables), carbon may be deposited on the surface of the reducing agent 4R, which results in a reduction in conversion efficiency. In this case, as illustrated in Fig. 13, when an operation of supplying oxygen to the reactor that is not used for the normal operation is performed, the carbon deposited on the surface of the reducing agent 4R can be removed by combustion, and the reducing agent 4R can be regenerated.

In this case, an inert gas (for example, nitrogen gas) may be purged into the reactor before and after oxygen is supplied to the reactor. This makes it possible to prevent the explosive reaction between the reducing gas and oxygen due to involuntary contact therebetween.

Further, as illustrated in Fig. 14, after the temperature of the reactor that is not used for the normal operation is lowered, the reducing agent 4R may be replaced, or the reactor may be overhauled.

Furthermore, since three or more reactors are used, the number of oxidation-reduction cycles per unit time can be less than that in a case where two reactors are used. Therefore, it is possible to extend the life of the reducing agent 4R in each reactor. In other words, the life of the reducing agent 4R can be controlled by adjusting the number of reactors.

Furthermore, in this embodiment, a water removal unit that removes water from the reducing gas which has passed through the second reactor may be installed between adjacent second reactors (in the middle of the gas lines GL5a to GL5d). In this case, it is possible to reduce the content of water (steam) in the reducing gas that passes through the second reactor in the previous stage and is supplied to the second reactor in the next stage. As a result, it is possible to prevent or suppress a reduction in the reduction efficiency (hereinafter, also referred to as "conversion efficiency of hydrogen into water") of the reducing agent 4R in the oxidized state.

The water removal unit can be configured by, for example, only one or a combination of two or more of a heat exchanger, a packed tower filled with an absorbent or an adsorbent, a membrane separation module, and the like. According to the heat exchanger, water can be condensed by a temperature difference to be physically separated. According to the packed tower, water can be separated chemically or physically by absorption or adsorption. In this case, the absorbent or the adsorbent may be regenerated and used as necessary. In addition, according to the membrane separation module, membrane separation using a pressure difference can be performed on water.

Further, the number of second reactors may be two or may be four or more (preferably four to eight) according to the degree of difference between the conversion efficiency of carbon dioxide into carbon monoxide and the conversion efficiency of hydrogen into water.

Meanwhile, for example, in a case where the reducing agent 4R, in which the conversion efficiency of hydrogen into water is higher than the conversion efficiency of carbon dioxide into carbon monoxide, is used, the number of second reactors through which the reducing gas passes may be one, and the number of first reactors through which the exhaust gas (oxidizing gas) continuously passes may be two or more (preferably two to eight).

Further, each of the number of first reactors and the number of second reactors may be two or more (preferably two to eight).

In addition, in a case where the number of first reactors and/or the number of second reactors is two or more, when the number of reactors installed is appropriately set, it is possible to prevent the pressure (feed pressure) of a process gas supplied to the reactors from increasing unnecessarily.

In a case where the number of first reactors is two or more, a carbon monoxide removal unit that removes carbon monoxide from the exhaust gas which has passed through the first reactor may be installed between adjacent first reactors (in the middle of the gas lines GL5a to GL5d). In this case, it is possible to reduce the content of carbon monoxide in the exhaust gas that passes through the first reactor in the previous stage and is supplied to the first reactor in the subsequent stage. Therefore, the content of carbon monoxide, which is a conversion product of carbon dioxide, is reduced, which makes it possible to prevent a reduction in the conversion efficiency of carbon dioxide into carbon monoxide in the first reactor in the subsequent stage.

The carbon monoxide removal unit can be configured by, for example, only one or a combination of two or more of a packed tower filled with an absorbent or an adsorbent, a membrane separation module, a molecular sieve membrane, and the like. According to the packed tower, carbon monoxide can be separated chemically or physically by absorption or adsorption. In this case, the absorbent or the adsorbent may be regenerated and used as necessary. According to the membrane separation module, membrane separation using a pressure difference can be performed on carbon monoxide. Moreover, according to the molecular sieve membrane, carbon monoxide can be separated according to the molecular sizes (for example, molecular radii) of carbon monoxide and carbon dioxide.

In addition, in a case where a plurality of reactors (first reactors) that supply the exhaust gas and/or a plurality of reactors (second reactors) that supply the reducing gas are provided, in general, the temperature of the gas (the exhaust gas and/or the reducing gas) supplied between the plurality of reactors disposed in series (continuously) differs due to the endothermic reaction or the exothermic reaction. However, when the temperature difference is too large, it is necessary to adjust the temperature of the gas supplied to the reactor in the subsequent stage. Therefore, it is preferable that the temperature difference is not too large.

Specifically, the temperature difference of the gas before and after the gas passes through one reactor is preferably set to 100°C or less, more preferably set to 80°C or less, and even more preferably set to 60°C or less.

The reducing agent 4R having these characteristics can be prepared by a combination of a metal oxide and a diluent.

### <Third Embodiment>

Next, a third embodiment of the gas production system will be described.

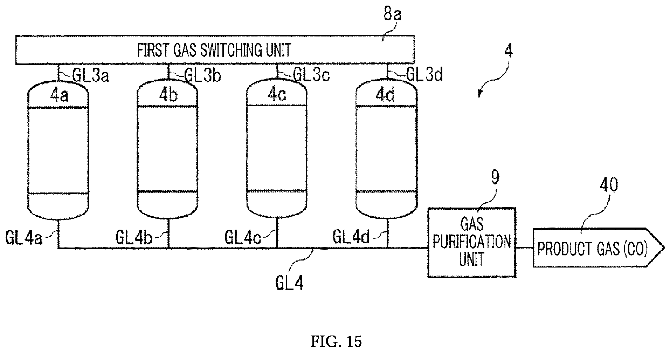

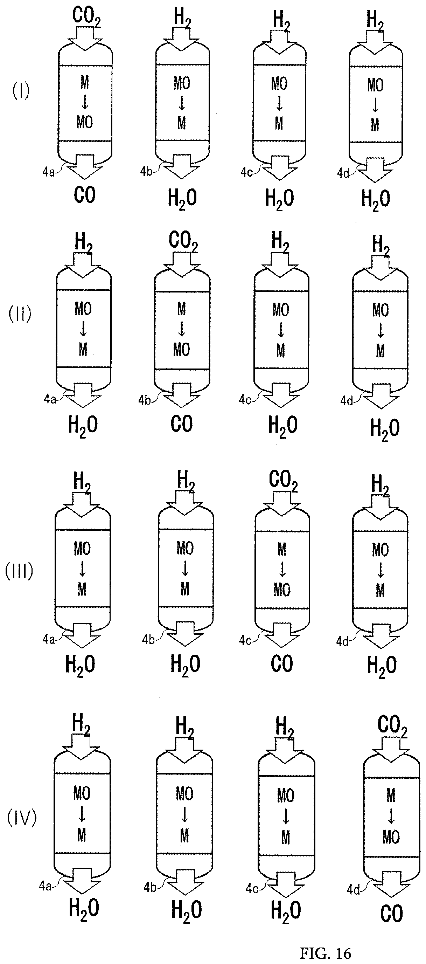

Fig. 15 is a schematic diagram illustrating a configuration of a reaction unit according to the third embodiment, and Fig. 16 is a schematic diagram illustrating a method for switching the gases to pass through reactors in the third embodiment. In addition, in Figs. 15 and 16, the temperature sensors 4T1 to 4T4 are not illustrated.

Hereinafter, the gas production system according to the third embodiment will be described, with a focus on the differences from the gas production systems according to the first and second embodiments. A description of the same configurations will be omitted.

The gas production system according to the third embodiment is the same as the gas production system according to the first embodiment except for the configuration of the reaction unit.

In a reaction unit 4 illustrated in Fig. 15, the second gas switching unit 8b and the gas lines GL5a to GL5d are omitted.

In addition, the gas lines GL4a to GL4d join to form one gas line GL4.

With this configuration, the first gas switching unit 8a can switch the gas lines (flow paths) such that, for example, the exhaust gas (oxidizing gas) is supplied to one of the reactors 4a to 4d and passes therethrough and the reducing gas is supplied to the remaining three reactors among the reactors 4a to 4d and passes therethrough in parallel.

In this embodiment, among the plurality of reactors 4a to 4d, one reactor to which the exhaust gas is supplied is the first reactor. When the exhaust gas is supplied to the first reactor, three reactors to which the reducing gas is supplied in parallel are the second reactors.

Specifically, in a first turn illustrated in Fig. 16(I), the exhaust gas (carbon dioxide) can be supplied to the reactor (first reactor) 4a through the gas line GL3a. Then, the exhaust gas (carbon monoxide) that has passed through the reactor 4a can be discharged through the gas line GL4a.

On the other hand, the reducing gas (hydrogen) can be supplied to the reactors 4b to 4d from the gas lines GL3b to CL3d in parallel, respectively. The reducing gas (water) that has passed through the reactors 4b to 4d can be discharged through the gas lines GL4b to GL4d, respectively.

Then, in a second turn illustrated in Fig. 16(II), the exhaust gas can be supplied to the reactor (first reactor) 4b and can pass therethrough. On the other hand, the reducing gas can be supplied to the reactors (second reactors) 4a, 4c, and 4d and can pass therethrough in parallel.

Then, in a third turn illustrated in Fig. 16(III), the exhaust gas can be supplied to the reactor (first reactor) 4c and can pass therethrough. On the other hand, the reducing gas can be supplied to the reactors (second reactors) 4a, 4b, and 4d and can pass therethrough in parallel.

Then, in a fourth turn illustrated in Fig. 16(IV), the exhaust gas can be supplied to the reactor (first reactor) 4d and can pass therethrough. On the other hand, the reducing gas can be supplied to the reactors (second reactors) 4a, 4b, and 4c and can pass therethrough in parallel.

In this embodiment, a series of operations from the first to fourth turns is regarded as one cycle and can be repeated in a plurality of cycles to continuously and stably convert carbon dioxide into carbon monoxide.

For example, in a case where the reducing agent 4R, in which the reduction efficiency of the oxidized state by hydrogen (reducing substance) (the conversion efficiency of hydrogen into water) is lower than the conversion efficiency of carbon dioxide into carbon monoxide, is used, when the reducing gas passes through one reactor only once, there is a concern that the reducing agent 4R in the oxidized state will not be sufficiently reduced. In contrast, in this embodiment, the reducing gas can pass through three reactors in parallel. In other words, in a steady operating state, the same amount of reducing gas as the exhaust gas can pass through one reactor for a period that is three times longer than that in the related art. Therefore, it is possible to sufficiently perform the reduction of the reducing agent 4R in the oxidized state by hydrogen (reducing gas).

Further, since three or more reactors are used, it is possible to provide a reactor that does not allow the passage of the exhaust gas and the reducing gas. Therefore, it is possible to perform other operations on the reactor that is not used for a normal operation for producing the product gas (carbon monoxide) while continuing the normal operation.

For example, when carbon dioxide is converted into carbon monoxide (carbon valuables), carbon may be deposited on the surface of the reducing agent 4R, which results in a reduction in conversion efficiency. At this time, when the operation of supplying oxygen to the reactor that is not used for the normal operation is performed, the carbon deposited on the surface of the reducing agent 4R can be removed by combustion, and the reducing agent 4R can be regenerated.

In this case, an inert gas (for example, nitrogen gas) may be purged into the reactor before and after oxygen is supplied to the reactor. This makes it possible to prevent the explosive reaction between the reducing gas and oxygen due to involuntary contact therebetween.

In addition, after the temperature of the reactor that is not used for the normal operation is lowered, the reducing agent 4R may be replaced, or the reactor may be overhauled.

Furthermore, since three or more reactors are used, the number of oxidation-reduction cycles per unit time can be less than that in a case where two reactors are used. Therefore, it is possible to extend the life of the reducing agent 4R in each reactor. In other words, the life of the reducing agent 4R can be controlled by adjusting the number of reactors.

Further, the number of second reactors may be two or may be four or more (preferably four to eight) according to the degree of difference between the conversion efficiency of carbon dioxide into carbon monoxide and the reduction efficiency of the reducing agent 4R in the oxidized state by hydrogen (the conversion efficiency of hydrogen into water).

Meanwhile, in a case where the reducing agent 4R, in which the conversion efficiency of hydrogen into water is higher than the conversion efficiency of carbon dioxide into carbon monoxide, is used, the number of second reactors through which the reducing gas passes may be one, and the number of first reactors through which the exhaust gas (oxidizing gas) passes in parallel may be two or more (preferably two to eight).

Further, each of the number of first reactors and the number of second reactors may be two or more (preferably two to eight).

### <Fourth Embodiment>

Next, a fourth embodiment of the gas production system will be described.

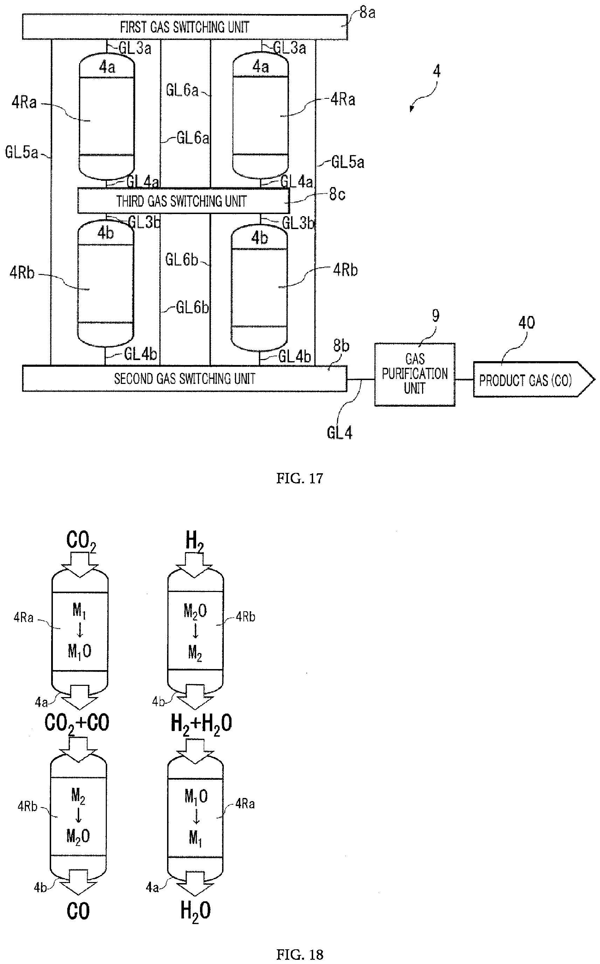

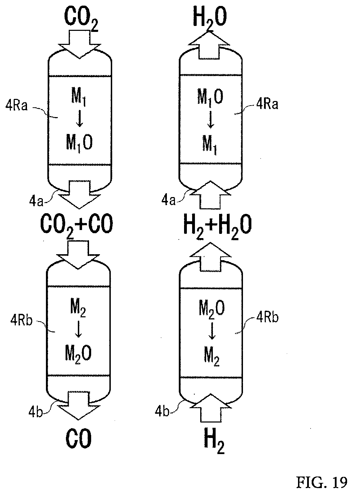

Fig. 17 is a schematic diagram illustrating a configuration of a reaction unit according to the fourth embodiment. Fig. 18 is a schematic diagram illustrating a method for switching the gases to pass through reactors in the fourth embodiment. Fig. 19 is a schematic diagram illustrating another method for switching the gases to pass through the reactors in the fourth embodiment. In addition, in Figs. 17 to 19, the temperature sensors 4T1 to 4T4 are not illustrated.

Hereinafter, the gas production system according to the fourth embodiment will be described, with a focus on the differences from the gas production systems according to the first to third embodiments. A description of the same configurations will be omitted.

The gas production system according to the fourth embodiment is the same as the gas production system according to the first embodiment except for the configuration of the reaction unit.

A reaction unit 4 illustrated in Fig. 17 has a configuration in which two reactors connected in series form a set and two sets of the reactors are connected in parallel.

Specifically, an upper reactor 4a is connected to the first gas switching unit 8a through the gas line GL3a and is connected to a third gas switching unit 8c through the gas line GL4a. In addition, a lower reactor 4b is connected to the third gas switching unit 8c through the gas line GL3b and is connected to the second gas switching unit 8b through the gas line GL4b.

Further, the first gas switching unit 8a and the third gas switching unit 8c are connected by a gas line GL6a, and the third gas switching unit 8c and the second gas switching unit 8b are connected by a gas line GL6b. The first gas switching unit 8a and the second gas switching unit 8b are connected by a gas line GL5a.

In this configuration, a reducing agent (first reducing agent) 4Ra is accommodated in the reactor 4a, and a reducing agent (second reducing agent) 4Rb different from the reducing agent 4Ra is accommodated in the reactor 4b.

With this configuration, the first gas switching unit 8a, the second gas switching unit 8b, and the third gas switching unit 8c switch the gas lines (flow paths) such that, for example, the exhaust gas (oxidizing gas) can be supplied to the reactors 4a and 4b on the left side and can pass therethrough and the reducing gas can be supplied to the reactors 4a and 4b on the right side and can pass therethrough.

In this embodiment, among the plurality of reactors 4a and 4b, two reactors to which the exhaust gas is continuously supplied are the first reactors. When the exhaust gas is supplied to the first reactors, two reactors to which the reducing gas is continuously supplied are the second reactors.

Specifically, as illustrated in Fig. 18, the exhaust gas (carbon dioxide) can be supplied to the reactor (first reactor) 4a on the left side through the gas line GL3a. Then, the exhaust gas (carbon dioxide and carbon monoxide) that has passed through the reactor 4a can be continuously supplied to the reactor (first reactor) 4b on the left side through the gas line GL4a and the gas line GL3b. Then, the exhaust gas (carbon monoxide) that has passed through the reactor 4b can be discharged through the gas line GL4b.

On the other hand, the reducing gas (hydrogen) can be supplied to the reactor (second reactor) 4b on the right side through the gas lines GL6a and GL3b. Then, the reducing gas (hydrogen and water) that has passed through the reactor 4b can be continuously supplied to the reactor (first reactor) 4a on the right side through the gas line GL4b, the gas line GL5a, and the gas line GL3a. Then, the reducing gas (water) that has passed through the reactor 4a can be discharged through the gas line GL4a and the gas line GL6b.

For example, a combination of the reducing agent 4Ra and the reducing agent 4Rb, which has a higher conversion efficiency of carbon dioxide into carbon monoxide (carbon valuables) and a lower conversion efficiency of hydrogen into water than the reducing agent 4Ra, can be used as the reducing agent 4R.

According to this configuration, the exhaust gas comes into contact with the reducing agent 4Ra having a low conversion efficiency of carbon dioxide into carbon monoxide and then comes into contact with the reducing agent 4Rb having a high conversion efficiency of carbon dioxide into carbon monoxide. On the other hand, the reducing gas comes into contact with the reducing agent 4Rb having a low conversion efficiency of hydrogen into water and then comes into contact with the reducing agent 4Ra having a high conversion efficiency of hydrogen into water.

As described above, both the exhaust gas and the reducing gas are configured to come into contact with the reducing agent with low activity and then to come into contact with the reducing agent with high activity. Therefore, it is possible to further increase the conversion efficiency of carbon dioxide into carbon monoxide and the conversion efficiency of hydrogen into water.

Further, for example, a combination of the reducing agent 4Ra that has low activity and a long life and the reducing agent 4Rb that has high activity and a short life can be used as the reducing agent 4R.

In a case where two reactors are used, one of the reducing agent 4Ra and the reducing agent 4Rb needs to be selected and used.

In contrast, in this embodiment, a certain portion of carbon dioxide can be converted into carbon monoxide in the reactor 4a in the previous stage that is filled with the reducing agent 4Ra with low activity. Then, the remaining carbon dioxide can be converted into carbon monoxide in the reactor 4b in the subsequent stage that is filled with the reducing agent 4Rb with high activity. Therefore, it is possible to reduce the frequency with which carbon dioxide comes into contact with active sites of each reducing agent (particularly, the reducing agent 4Rb having a short life) and to extend the life of the entire reducing agent 4R.

Further, for example, a combination of the reducing agent 4Ra that has high activity and is likely to generate by-products and the reducing agent 4Rb that can convert the by-products into carbon valuables can be used as the reducing agent 4R.

In a case where two reactors are used, the reducing agent 4Ra is usually used. However, in this case, it is necessary to separate and remove the generated by-products with some means.

In contrast, in this embodiment, even when the reducing agent 4Ra that is likely to generate by-products is used in the reactor 4a in the previous stage, it is possible to improve the selectivity and conversion rate of the entire reaction unit 4 because the reactor 4b filled with the reducing agent 4Rb that can convert the by-products into carbon valuables is provided in the subsequent stage.

Furthermore, for example, a combination of two types of reducing agents 4Ra and 4Rb having different optimum reaction temperatures can be used as the reducing agent 4R.

In a case where two reactors are used, it is not possible to use the reducing agents 4Ra and 4Rb having different optimal reaction temperatures in combination.

In contrast, in this embodiment, the reducing agents 4Ra and 4Rb having different optimal reaction temperatures can be used in combination.

Further, for example, a combination of the reducing agent 4Ra that has high activity and high pressure loss and the reducing agent 4Rb that has low activity and low pressure loss can be used as the reducing agent 4R.

In a case where two reactors are used, one of the reducing agent 4Ra and the reducing agent 4Rb needs to be selected and used.

In contrast, in this embodiment, since the reducing agent 4Ra and the reducing agent 4Rb are used in combination, it is possible to set the entire reaction unit 4 to any pressure loss and any conversion efficiency.

Moreover, in the configuration illustrated in Fig. 18, the direction in which the exhaust gas passes through the reactors 4a and 4b and the direction in which the reducing gas passes through the reactors 4a and 4b are the same direction. With this configuration, as compared to a case where the two directions are opposite directions (countercurrent flow), a valve switching operation is easy, and the supply amounts of the exhaust gas or the reducing gas that does not contribute to the reaction are minimized. Therefore, it is possible to improve the conversion efficiency of carbon dioxide into carbon monoxide or the regeneration efficiency of the reducing agent 4R (4Ra and 4Rb) in the oxidized state.

As illustrated in Fig. 19, the exhaust gas (carbon dioxide) can be supplied to the reactor (first reactor) 4a on the left side through the gas line GL3a. Then, the exhaust gas (carbon dioxide and carbon monoxide) that has passed through the reactor 4a can be continuously supplied to the reactor (first reactor) 4b on the left side through the gas line GL4a and the gas line GL3b. Then, the exhaust gas (carbon monoxide) that has passed through the reactor 4b can be discharged through the gas line GL4b.

On the other hand, the reducing gas (hydrogen) can be supplied to the reactor (second reactor) 4b on the right side through the gas line GL6a, the gas line GL6b, and the gas line GL4b. Then, the reducing gas (hydrogen and water) that has passed through the reactor 4b can be continuously supplied to the reactor (first reactor) 4a on the right side through the gas line GL3b and the gas line GL4a. Then, the reducing gas (water) that has passed through the reactor 4a can be discharged through the gas line GL3a and the gas line GL5a.

Even with this configuration, the exhaust gas comes into contact with the reducing agent 4Ra having a low conversion efficiency of carbon dioxide into carbon monoxide and then comes into contact with the reducing agent 4Rb having a high conversion efficiency of carbon dioxide into carbon monoxide. On the other hand, the reducing gas comes into contact with the reducing agent 4Rb having a low conversion efficiency of hydrogen into water and then comes into contact with the reducing agent 4Ra having a high conversion efficiency of hydrogen into water.

As described above, both the exhaust gas and the reducing gas are configured to come into contact with the reducing agent with low activity and then to come into contact with the reducing agent with high activity. Therefore, it is possible to further increase the conversion efficiency of carbon dioxide into carbon monoxide and the reduction efficiency of the oxidized state by hydrogen.

In addition, in the configuration illustrated in Fig. 19, the direction in which the exhaust gas passes through the reactors 4a and 4b and the direction in which the reducing gas passes through the reactors 4a and 4b are opposite directions. With this configuration, as compared to a case where the two directions are the same direction (parallel flow), it is easy to improve the conversion efficiency of carbon dioxide into carbon monoxide or the regeneration efficiency of the reducing agent 4R (4Ra and 4Rb) in the oxidized state.

In a case where a combination of the reducing agent 4Ra and the reducing agent 4Rb, which has a higher conversion efficiency of carbon dioxide into carbon monoxide and a lower conversion efficiency of hydrogen into water than the reducing agent 4Ra, is used as the reducing agent 4R, for example, a metal oxide including at least one of copper and iron is given as a specific example of the reducing agent 4Ra, and, for example, a metal oxide including cerium is given as a specific example of the reducing agent 4Rb.

Further, in this embodiment, a reactor that stores a third reducing agent different from the reducing agent (first reducing agent) 4Ra and the reducing agent (second reducing agent) 4Rb through the third gas switching unit may be disposed between the reactor 4b and the second gas switching unit 8b. For example, a reducing agent that has a higher conversion efficiency of carbon dioxide into carbon monoxide (carbon valuables) and a lower conversion efficiency of hydrogen into water than the reducing agent 4Rb is selected as the third reducing agent.

That is, in this embodiment, two or more different types of reducing agents can be accommodated in different reactors and used.

The gas production apparatus and the gas production system according to the present invention have been described above. However, the present invention is not limited thereto.

For example, each of the gas production apparatus and gas production system according to the present invention may have any other additional configurations with respect to the above-described embodiments or may be replaced with any configurations having similar functions. In addition, some configurations may be omitted.

Further, any configurations according to the first to fourth embodiments may be combined.

In addition, in the above-described embodiments, the gas including hydrogen is representatively described as the reducing gas. However, gas that includes, as the reducing substance (second substrate gas), at least one selected from hydrocarbons (for example, methane, ethane, acetylene, and the like) and ammonia instead of or together with hydrogen may be used as the reducing gas.

Further, in the first embodiment, only one reactor may be used.

Furthermore, in the above-described embodiments, the case where one of the reaction involving heat generation and the reaction involving heat absorption is the reduction reaction of the substrate gas by the packed bed and the other reaction is the oxidation reaction of the substrate gas by the packed bed has been described. However, the reaction involving heat generation and the reaction involving heat absorption may be other reactions between the substrate gas and the packed bed. Examples of other reactions include an adsorption and desorption reaction between the substrate gas and the packed bed.

### Reference Signs List

100 Gas production system
1 Gas production apparatus
2 Connection portion
3 Reducing gas supply unit
4 Reaction unit
4a to 4d Reactor
41 Container
411 Container body
411a Opening portion
411b Body portion
411c Bottom
412 Lid
42 Reducing agent layer
4R, 4Ra, 4Rb Reducing agent
43 Gas diffusion plate
44 Support plate
43' Tube body
44' Tube plate
45 Heat-resistant structure
471 Microwave irradiator
4D Thermal conductor
472 Tube body
473 Medium line
474 Transfer device
475 Heating device
48 Inlet port
49 Outlet port
401 Tube body
402 Medium line
403 Transfer device
404 Temperature control device
5 Concentration adjustment unit
6 Compression unit
7 Fine component removal unit
8a First gas switching unit
8b Second gas switching unit
8c Third gas switching unit
9 Gas purification unit
10 Exhaust gas heating unit
11 Reducing gas heating unit
20 Furnace
30 Tank
40 Product gas discharge unit
GL1 Gas line
GL2 Gas line
GL3a to GL3d Gas line
GL4 Gas line
GL4a to GL4d Gas line
GL5a to GL5d Gas line
GL6a, GL6b Gas line
4T1 to 4T4 Temperature sensor
H Thickness (length of reducing agent layer in gas passage direction)
S Interval
D Separation distance (length from downstream-side end of reducing agent layer in gas passage direction)
Max Maximum fluctuation value

## Claims

1. A gas production apparatus comprising:
at least one reactor including a container through which a substrate gas is capable of passing and a packed bed with which the container is filled and which includes a metal oxide that exchanges oxygen elements with the substrate gas by an exothermic reaction or an endothermic reaction; and
a plurality of temperature sensors that are connected to the reactor and measure temperatures of a plurality of measurement points of the packed bed along a passage direction of the substrate gas, respectively,
wherein, when a length of the packed bed along the passage direction is H, an interval between adjacent measurement points is equal to or less than H/3.

2. The gas production apparatus according to claim 1,
wherein an absolute value of a difference between an average value of the temperatures of the packed bed measured at the plurality of measurement points before supply of the substrate gas to the reactor is started and a maximum fluctuation value of the temperature of the packed bed measured at each of the measurement points after the supply of the substrate gas to the reactor is started is equal to or less than 200°C.

3. The gas production apparatus according to claim 1 or 2,
wherein the packed bed further includes a diluent that makes the number of the oxygen elements contributing to the exchange per unit volume of the entire packed bed smaller than the number of the oxygen elements contributing to the exchange per unit volume of only the metal oxide.

4. The gas production apparatus according to claim 3,
wherein the metal oxide is supported on the diluent.

5. The gas production apparatus according to any one of claims 1 to 4, further comprising:
a heat exchanger that adjusts a temperature of the substrate gas, using heat of gas, before the substrate gas is supplied to the reactor.

6. The gas production apparatus according to any one of claims 1 to 5,
wherein a temperature difference of the substrate gas before and after the substrate gas passes through one of the at least one reactor is equal to or less than 100°C.

7. The gas production apparatus according to any one of claims 1 to 6,
wherein a plurality of the reactors that are capable of switching and supplying a first substrate gas causing the exothermic reaction and a second substrate gas causing the endothermic reaction as the substrate gas are provided.

8. The gas production apparatus according to claim 7,
wherein a temperature of the first substrate gas supplied to the reactor is set to be 30°C or more lower than a temperature of the second substrate gas supplied to the reactor.

9. The gas production apparatus according to claim 7 or 8,
wherein the temperature of the packed bed of the reactor that supplies the first substrate gas is set to be 30°C or more lower than the temperature of the packed bed of the reactor that supplies the second substrate gas.

10. The gas production apparatus according to any one of claims 7 to 9,
wherein the number of the reactors supplying the second substrate gas is two or more, and the temperatures of the second substrate gas supplied to the reactors are different from each other.

11. The gas production apparatus according to claim 10,
wherein the plurality of reactors that supply the second substrate gas are connected in series.

12. The gas production apparatus according to any one of claims 7 to 11,
wherein one of the plurality of temperature sensors is capable of measuring the temperature of the measurement point that is located at H/5 to H/20 from a downstream-side end of the packed bed in the passage direction, and
when a change in the temperature of the measurement point is equal to or greater than 40% of a temperature change measured at the measurement point on a most upstream side in the packed bed in the passage direction, the first substrate gas and the second substrate gas are switched.

13. The gas production apparatus according to any one of claims 7 to 12,
wherein a reaction amount of the metal oxide is calculated from a sum of temperature changes at the plurality of measurement points measured by the plurality of temperature sensors, and
when the calculated reaction amount reaches a predetermined value, the first substrate gas and the second substrate gas are switched.

14. The gas production apparatus according to any one of claims 7 to 13,
wherein the first substrate gas is carbon dioxide, and the second substrate gas is hydrogen.

15. A gas production system comprising:
a gas supply unit that supplies a source gas including carbon dioxide;
the gas production apparatus according to any one of claims 1 to 14 that is connected to the gas supply unit; and
a gas recovery unit that recovers a product gas which has been produced in the gas production apparatus and includes carbon monoxide.

16. A gas production method comprising:
when a first substrate gas or a second substrate gas is supplied to each of independent reactors, each of which has a reducing agent including a metal oxide that exchanges oxygen elements between the first substrate gas and the second substrate gas, to perform a reaction involving heat generation of the first substrate gas or a reaction involving heat absorption of the second substrate gas by the reducing agent, setting a temperature of the first substrate gas to be 30°C or more lower than a temperature of the second substrate gas.

17. The gas production method according to claim 16,
wherein the temperature of the one substrate gas is 580°C to 1100°C, and the temperature of the other substrate gas is 550°C to 1000°C.

18. The gas production method according to claim 16 or 17,
wherein one of the reaction involving the heat generation of the first substrate gas and the reaction involving the heat absorption of the second substrate gas is a reduction reaction, and the other reaction is an oxidation reaction.

19. The gas production method according to any one of claims 16 to 18,
wherein the first substrate gas is carbon dioxide, and the second substrate gas is hydrogen.
